(19) Europäisches Patentamt
European Patent Office
Office européen des brevets

(11) **EP 1 779 271 B1**

(12) **EUROPÄISCHE PATENTSCHRIFT**

(45) Veröffentlichungstag und Bekanntmachung des Hinweises auf die Patenterteilung:
**02.01.2008  Patentblatt 2008/01**

(21) Anmeldenummer: **05777992.8**

(22) Anmeldetag: **09.08.2005**

(51) Int Cl.:
**G06F 17/30** *(2006.01)*

(86) Internationale Anmeldenummer:
**PCT/EP2005/053921**

(87) Internationale Veröffentlichungsnummer:
**WO 2006/018411 (23.02.2006 Gazette 2006/08)**

(54) **SPRACH- UND TEXTANALYSEVORRICHTUNG UND ENTSPRECHENDES VERFAHREN**

SPEECH AND TEXTUAL ANALYSIS DEVICE AND CORRESPONDING METHOD

DISPOSITIF D'ANALYSE VOCALE ET TEXTUELLE ET PROCEDE CORRESPONDANT

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **13.08.2004   WOPCT/EP2004/051798**

(43) Veröffentlichungstag der Anmeldung:
**02.05.2007   Patentblatt 2007/18**

(73) Patentinhaber: **Swiss Reinsurance Company 8002 Zurich (CH)**

(72) Erfinder:
- **WÄLTI, Paul**
  **Buchs SG, 9470 (CH)**
- **TRUGENBERGER, Carlo A.**
  **Genève, 1209 (CH)**
- **CUYPERS, Frank**
  **Zürich, 8049 (CH)**

- **WÄLTI, Christoph P.**
  **Buchs SG, 9470 (CH)**

(74) Vertreter: **Braun, André jr.**
**Braunpat Braun Eder AG**
**Reussstrasse 22**
**CH-4054 Basel (CH)**

(56) Entgegenhaltungen:
**WO-A-03/052627          US-B1- 6 711 585**

- **IIRITANO S ET AL: "Managing the knowledge contained in electronic documents: a clustering method for text mining" PROCEEDINGS OF SECOND INTERNATIONAL DEXA WORKSHOP ON THEORY AND APPLICATIONS OF KNOWLEDGE MANAGEMENT, 3. September 2001 (2001-09-03), Seiten 454-458, XP010558781**

**Beschreibung**

Die Erfindung betrifft ein System und ein Verfahren zur automatisierten Sprach- und Textanalyse mittels Bildung eines Such- und/oder Klassifizierungskataloges, wobei mit einer linguistischen Datenbank Datenrekords erfasst werden und Sprach- und/oder Textdaten nach den Datenrekords (Schlagworten und/oder Suchbegriffen) klassifiziert und/oder sortiert werden. Die Erfindung betrifft insbesondere ein Computerprogrammprodukt zur Durchführung dieses Verfahrens.

In den letzten Jahren hat die Bedeutung von grossen Datenbanken, insbesondere dezentralisiert verknüpften Datenbanken z.B. über Netzwerke wie das weltweite Backbone-Netzwerk Internet exponentiell zugenommen. Mehr und mehr Informationen, Waren und/oder Dienste werden über solche Datenbanken oder Netzwerke angeboten. Dies zeigt sich schon in der Omnipräsenz des Internets heutzutage. Vor allem durch die Verfügbarkeit und Menge solcher Daten haben gerade z.B. im Internet Tools zum Suchen und Finden relevanter Dokumente und/oder zum Klassifizieren gefundener Dokumente eine ungeheure Bedeutung bekommen. Solche Tools für dezentralisierte Datenbankstrukturen oder Datenbanken im Allgemeinen sind bekannt. Im Internet wird dabei häufig von "Search-Engines" gesprochen, wie z.B. die bekannten Google™, Alta Vista™ oder strukturierte vorsortierte Verweistabellen wie z.B. Yahoo™.

Das Problem beim Suchen und/oder Katalogisieren von Textdokumenten in einer oder mehreren Datenbanken umfasst u.a. die folgenden Aufgaben: (1) Indexieren oder Katalogisieren des Inhalts der zu bearbeitenden Dokumente (Content Synthesis), (2) Ausführen einer Suchanfrage über den indexierten und/oder katalogisierten Dokumente (Content Retrieval). Normalerweise umfassen die zu indexierenden und/oder katalogisierenden Daten unstrukturierte Dokumente wie z.B. Text, Beschreibungen, Verweisen. In komplexeren Datenbanken können die Dokumente auch Multimediadaten mit z.B. Bildern, Sprach-/Tondaten, Videodaten etc. etc umfassen. Im Internet können dies z.B. Daten sein, die mittels Verweisen (Links) von einer Web-Site herunter geladen werden können.

Die US-Patentschrift US 6714939 zeigt ein solches Verfahren und System, um reinen Text oder Textdokumente in strukturierte Daten umzuwandeln. Das System des Standes der Technik kann insbesondere dazu genutzt werden, um Daten einer Datenbank abzufragen und/oder zu finden.

Neuronale Netze sind im Stand der Technik bekannt und werden z.B. zum Lösen von Optimierungsaufgaben, Bildererkennung (Patternrecogition), in der künstlichen Intelligenz etc. eingesetzt. Entsprechend biologischer Nervennetze besteht ein neuronales Netzwerk aus einer Vielzahl von Netzknoten, sog. Neuronen, die über gewichtete Verbindungen (Synapsen) miteinander verbunden sind. Die Neuronen sind in Netzschichten (Layers) organisiert und zusammengeschaltet. Die einzelnen Neuronen werden in Abhängigkeit ihrer Eingangssignale aktiviert und erzeugen ein entsprechendes Ausgangssignal. Die Aktivierung eines Neurons erfolgt über einen individuellen Gewichtsfaktor durch die Summation über die Eingangssignale. Derartige neuronale Netze sind lernfähig, indem die Gewichtsfaktoren in Abhängigkeit von vorgegebenen beispielhaften Eingangs- und Ausgangswerten systematisch so lange verändert werden, bis das neuronale Netz in einem definierten vorhersagbaren Fehlerbereich ein gewünschtes Verhalten zeigt, wie z. B. die Vorhersage von Ausgabewerten für zukünftige Eingangswerte. Damit weisen neuronale Netze adaptive Fähigkeiten zur Erlernung und Speicherung von Wissen und assoziative Fähigkeiten zum Vergleich von neuen Informationen mit gespeichertem Wissen auf. Die Neuronen (Netzknoten) können einen Ruhezustand oder einen Erregungszustand einnehmen. Jedes Neuron hat mehrere Eingänge und genau einen Ausgang, der mit den Eingängen anderer Neuronen der nachfolgenden Netzschicht verbunden ist oder im Falle eines Ausgangsknotens einen entsprechenden Ausgangswert repräsentiert. Ein Neuron geht in den Erregungszustand über, wenn eine genügende Anzahl der Eingänge des Neurons über einem bestimmten Schwellenwert des Neurons erregt sind, d.h. falls die Summation über den Eingängen einen bestimmten Schwellwert erreicht. In den Gewichten der Eingänge eines Neurons und in dem Schwellenwert des Neurons ist das Wissen durch Adaption abgespeichert. Mittels Lernvorgang werden die Gewichte eines neuronalen Netzes trainiert (siehe z.B. G. Cybenko, "Approximation by Superpositions of a sigmoidal function", Math. Control, Sig. Syst., 2, 1989, pp 303-314; M.T. Hagan, M.B. Menjaj, "Training Feedforward Networks with the Marquardt Algorithm", IEEE Transactions on Neural Networks, Vol. 5, Nr. 6, pp 989-993, November 1994; K. Hornik, M. Stinchcombe, H. White, "Multilayer Feedforward Networks are universal Approximators", Neural Networks, 2, 1989, pp 359-366 etc.).

Im Gegensatz zu Supervised Learning Neural Nets wird beim Lernvorgang der Unsupervised Learning Neural Nets dem NN kein gewünschtes Ausgabemuster vorgegeben. Hier versucht das NN selbst eine möglichst sinnvolle Repräsentation der Eingabedaten zu erreichen. Im Stand der Technik sind z.B. sog. Topological Feature Maps (TFM) wie Kohonen Maps bekannt. Bei den TFM versucht das Netzwerk, die Eingabedaten möglichst sinnvoll auf eine vorgegebene Anzahl von Klassen zu verteilen. Es wird hier also als Klassifikator eingesetzt. Mit Klassifikatoren wird versucht, einen Merkmalsraum, d.h. eine Menge von Eingabedaten, möglichst sinnvoll in eine Anzahl von n Untergruppen zu unterteilen. In den meisten Fällen ist die Anzahl der Untergruppen oder Klassen im voraus festgelegt. Für das Wort "sinnvoll" können beliebig viele Interpretationen eingesetzt werden. Eine übliche Interpretation für einen Klassifikator wäre beispielsweise: "Bilde die Klassen so, dass die Summe der Abstände zwischen den Merkmalsvektoren und den Klassenmittelpunkten der Klassen, denen sie zugeordnet werden, möglichst gering ist." Es wird also ein Kriterium eingeführt, welches entweder minimiert oder maximiert werden soll. Aufgabe des Klassifikationsalgorithmus ist es, die Klassifikation für dieses Kriterium und die gegebenen Eingabedaten in möglichst geringer Zeit vorzunehmen.

TFM, wie z.B. Kohonen Maps, ermöglichen eine Abbildung eines hochdimensionalen Merkmalsraumes in einen Niederdimensionalen unter Beibehaltung der wichtigsten Charakteristika. Sie unterscheiden sich von anderen Klassen von NN dadurch, dass in der Lernphase zu einem Eingabemuster kein explizites oder implizites Ausgabemuster vorgegeben wird. Während der Lernphase von TFMs adaptieren selbige schon die Eigenschaften des verwendeten Merkmalsraumes. Die Verbindung zwischen einem klassischen Klassifikator und einem selbstorganisierenden neuronalen Netzwerk bzw. einer Topological Feature Map (TFM) besteht darin, dass das Ausgabemuster einer TFM meist aus einem einzelnen erregten Neuron besteht. Das Eingabemuster wird der Klasse des erregten Ausgabeneurons zugeordnet. Bei TFMs, bei denen mehrere Neuronen der Ausgabeschicht erregt sein können, wird zumeist einfach das mit dem höchsten Erregungspegel als Klasse gewertet, der das Eingabemuster zugeordnet wird. Somit wird das kontinuierliche Modell eines Klassifikators, bei dem ein Merkmal zu bestimmten Graden einer Klasse zugeordnet wird, in ein diskretes Modell übergeführt.

Im Stand der Technik ist u.a. die Verwendung von Kohonenmaps bekannt. Z.B. zeigt das Dokument XP002302269 von Farkas J. "Using Kohonen Maps to Determine Document Similaritiy" eine solche Verwendung. Darin wird für eine gegebene Problemstellung zunächst ein bereichspezifisches Vokabular ("Keywords") aufgesetzt und anschliessend daraus ein problemspezifischer Thesaurus konstruiert (gemäss ISO 2788). Dieser Stand der Technik hat jedoch den Nachteil, dass aus den zu klassifizierenden Dokumenten nur diejenigen Begriffe herausgezogen werden können, welche ebenfalls im konstruierten Thesaurus vorkommen. Insbesondere aus diesem Grund erlaubt dieses System keine Automatisierung der Problemlösung. Aus den genannten Extrakten werden dann die Vektoren gebildet, welche schliesslich in ein Kohonen-Netz mit einer vorgegebenen Grösse einfliessen. Als Ähnlichkeitsmass wird hier die klassische Euklidsche Metrik verwendet. In einem anderen System des Standes der Technik (Iritano S. und M. Ruffolo: "Managing the knowledge contained in electronic documents: a clustering method for text miniming", XP010558781) werden in den zu analysierenden Dokumenten Wörter herausgegriffen, auf Stammformen reduziert (lexikalische Analyse) und die Häufigkeiten der verschiedenen Stammwörter pro Dokument ermittelt. Dabei können vorgegebene nichtinteressierende Wörter ausgeschlossen werden. Die Stammwörter (in der Publikation als Synonyme bezeichnet) werden für die Suche indexiert und schliesslich wird ein spezieller Clustering-Algorithmus angewandt, welcher die Überlappung von Wörtern in den verschiedenen Dokumenten als Ähnlichkeitsmass verwendet. Bei einer Beschränkung auf englische Dokumente ist ausserdem eine Sinndeutung auf der Basis des WordNets der Princeton University möglich. Eines der Nachteile dieses Standes der Technik ist, dass das Verfahren lediglich abstrakte Clusters liefert, welche ohne situative menschliche Arbeit keine Sinndeutung ermöglichen, d.h. dass auch dieses System des Standes der Technik keine wirkliche Automatisierung des Verfahrens erlaubt. Weiter bringt die Beschränkung auf WordNet der Princeton University als Wissensbasis eine Einschränkung, die z.B. eine sprachübergreifende Anwendung bzw. eine universelle Taxonomie nicht gewährleistet.

Ein anderer Stand der Technik WO 03/052627 A1 von Semper Peter Paul et. al. "Information Resource Taxonomy" beschreibt ein Verfahren, welches die Häufigkeit vorkommender Wörter in Dokumente ermittelt und Cluster gemäss "TACT specification" (PCT/AU01/00198) bildet. In einer Vorphase werden zur Geräuschreduktion (noise reduction) häufig vorkommende Phrasen ermittelt und dann gestrichen, wenn deren Häufigkeit eine bestimmte Schranke überschreitet. Die Patentschrift betrifft jedoch im Wesentlichen ein Verfahren zur automatischen Generierung von Cluster-Hierarchien, d.h. von hierarchisch strukturierten Clustern von Dokumenten. Der in dieser Patentschrift verwendete Begriff "resource taxonomy" bezieht sich auf die Anordnung der Dokumenten-Cluster (vergleichbar mit einer hierarchischen Directory-Struktur für eine sinnvolle Ablage der Dokumente). In WO 03/052627 A1 wird mit "Taxonomie" eine Cluster-Struktur von Directories (Directory-Struktur) bezeichnet. Hingegen wird in der hier vorliegenden Patentschrift gemäss der Erfindung mit "Taxonomie" die inhaltliche Einstufung von Wörter und Begriffen bezeichnet. Schlussendlich zeigt die Patentschrift US 6711585 B1 "System and Method for Implementing a Knowledge Management System" der Erfinder Copperman Max et al. ein ähnliches Verfahren mit der Konstruktion einer Cluster-Hierarchie und der Zuordnung von Dokumenten bzw. Abfrage zu einem speziellen Cluster wie WO03/052627 A1. Die einzelnen Dokumente werden dabei formell als "Knowledge Container" strukturiert (bestehend aus Metadaten, Taxonomie-Tags, markierter Inhalt, Original-Inhalt und Links). Der Nachteil dieses Standes der Technik ist u.a., dass die Clusterbildung sich auf einzelne Dokumente bezieht, wodurch keine wirkliche globale Erfassung der vorkommenden Begriffe in den Dokumenten möglich ist. Eine Themengliederung durch ein weiteres Verarbeiten ist dadurch ausgeschlossen oder stark eingeschränkt. Dies verhindert insbesondere eine entsprechende Automatisierung des Verfahrens.

Es ist eine Aufgabe dieser Erfindung, ein neues System und automatisiertes Verfahren zur Bildung eines Such- und/oder Klassifizierungskataloges vorzuschlagen, das die oben genannten Nachteile des Standes der Technik nicht aufweist. Insbesondere soll ein automatisiertes, einfaches und rationelles Verfahren vorgeschlagen werden, um eine Vielzahl von Sprach- und/oder Textdaten, welche beispielsweise über eine oder mehrere Datenbanken zugreifbar abgespeichert sind, zu klassifizieren und/oder zu sortieren und/oder für eine Suchabfrage zu indexieren. Die Erfindung soll ein Indexierungsverfahren für die effiziente und zuverlässige thematische Suche, d.h. für das Auffinden von Dokumenten, die einer gegebenen Abfrage, bestehend aus einem ganzen Textdokument oder aus einzelnen Stichwörtern, möglichst ähnlich sind, erzeugen. Die Erfindung soll weiter ein klar definiertes Mass für die objektive Bewertung der Ähnlichkeit zweier Dokumente beim Vergleich und beim Ranking von Dokumenten erzeugen. Zusätzlich soll die Erfindung ein Verfahren zur Identifikation von zusammengehörenden Dokument-Clustern, d.h. von Dokumenten, die beinahe identisch sind (verschiedene Versionen des gleichen Dokuments mit kleinen Änderungen), erzeugen.

Gemäss der vorliegenden Erfindung wird dieses Ziel insbesondere durch die Elemente der unabhängigen Ansprüche erreicht. Weitere vorteilhafte Ausführungsformen gehen ausserdem aus den abhängigen Ansprüchen und der Beschreibung hervor.

Insbesondere werden diese Ziele durch die Erfindung dadurch erreicht, dass mittels einer Sprach- und Textanalysevorrichtung ein Such- und/oder Klassifizierungskatalog gebildet wird, welcher mindestens eine linguistische Datenbank zum Zuordnen von linguistischen Begriffen zu Datenrekords umfasst, wobei die linguistischen Begriffe mindestens Schlagworte und/oder Suchbegriffe umfassen, und Sprach- und/oder Textdaten entsprechend der Datenrekords klassifizierbar und/oder sortierbar sind, dass die Sprach- und Textanalysevorrichtung eine Taxonomie-Table mit variablen Taxonknoten basierend auf der linguistische Datenbank umfasst, wobei ein oder mehrere Datenrekords einem Taxonknoten in der Taxonomie-Table zuordenbar sind, und wobei jeder Datenrekord einen variablen Signifikanzfaktor zur Wertung der Begriffe basierend mindestens auf Füllworten und/oder Verbindungsworten und/oder Schlagworten+ umfasst, dass jeder Taxonknoten zusätzlich einen Gewichtsparameter zum Erfassen von Auftrethäufigkeiten von Begriffen innerhalb der zu klassifizierenden und/oder sortierenden Sprach- und/oder Textdaten umfasst, dass die Sprach- und/oder Textanalysevorrichtung ein Integrationsmodul zum Bestimmen einer vordefinierbaren Anzahl Agglomerate basierend auf den Gewichtsparametern der Taxonknoten in der Taxonomie-Table umfasst, wobei ein Agglomerat mindestens ein Taxonknoten umfasst, und dass die Sprach- und/oder Textanalysevorrichtung mindestens ein neuronales Netzwerkmodul zum Klassifizieren und/oder Sortieren der Sprach- und/oder Textdaten basierend auf den Agglomeraten in der Taxonomie-Table umfasst. Die linguistische Datenbank kann z.B. mehrsprachige Datenrekords umfassen. Diese Ausführungsvariante hat u.a. den Vorteil, dass Dokumente Sammlungen oder ganz allgemein Daten z.B. in Datenbanken, insbesondere dezentralisierten Datenbanken ohne menschliche Intervention (z.B. kein Trainieren eines Netzwerkes, kein Vorbereiten einer inhaltsspezifischen Taxonomie etc. etc.), logisch gruppiert werden können. Weiter kann einfach ein visueller Überblick über den thematischen Inhalt einer Dokumentensammlung mittels einer topologischen Karte erstellt werden. Diese Vorrichtung und automatisiertes Verfahren kann damit als ein entscheidender Fortschritt bei "table of content" Verfahren gewertet werden. Insbesondere erzeugt die Erfindung ein äusserst zuverlässiges und effizientes Toll für thematisches Suchen (Erkennung von Dokumenten entsprechend einer Sucheingabe in natürlicher Sprache) zusätzlich zum konventionellen Suchen des Standes der Technik mittels einer Kombination von Suchbegriffen. Insbesondere können Suchresultate mittels der Projektion auf die topologische und/oder geographische Karte (Map) einfachst anschaulich dargestellt werden als sog. "heat map" Darstellung im Gegensatz zu den konventionellen unkategorisierten Listenformaten. Weiter erzeugt die Erfindung ein gut kontrollierbares Mass zum Vergleich und/oder Ähnlichkeitswertung von Dokumenten. Ebenso erzeugt die Erfindung ein echtes mehrsprachiges Wissensmanagement mit sprachübergreifenden Suchfunktionen. Dies ist so im Stande der Technik bis jetzt nicht möglich. Schlussendlich erlaubt die Erfindung auch ein automatisiertes Generieren von "Deskriptoren", wobei Deskriptoren die Inhaltscharakteristik eines Dokumentes (auch mit cross-language Eigenschaften) wiedergeben. Damit erzeugt die Erfindung ein Indexierungsverfahren für die effiziente und zuverlässige thematische Suche, d.h. für das Auffinden von Dokumenten, die einer gegebenen Abfrage, bestehend aus einem ganzen Textdokument oder aus einzelnen Stichwörtern, möglichst ähnlich sind. Ebenso erzeugt die Erfindung ein klar definiertes Mass für die objektive Bewertung der Ähnlichkeit zweier Dokumente beim Vergleich und beim Ranking von Dokumenten. Zusätzlich erzeugt die Erfindung ein Verfahren zur Identifikation von zusammengehörenden Dokument-Clustern, d.h. von Dokumenten, die beinahe identisch sind (verschiedene Versionen des gleichen Dokuments mit kleinen Änderungen).

In einer Ausführungsvariante umfasst mindestens eine linguistische Datenbank zum Zuordnen von linguistischen Begriffen zu Datenrekords, wobei mittels der Sprach- und Textanalysevorrichtung Sprach- und/oder Textdaten entsprechend der Datenrekords klassifizierbar und/oder sortierbar sind und wobei die linguistischen Begriffe mindestens Schlagworte und/oder Suchbegriffe umfassen, wobei die linguistische Datenbank Verknüpfungen von Wörter und/oder zusammengesetzten Begriffen ähnlicher Bedeutung umfasst, welche Verknüpfungen Synonymgruppen einer Taxonomie-Table zuordenbar sind, wobei die Sprach- und/oder Textanalysevorrichtung ein Gewichtungsmodul zum Gewichten von Tableelemente der Taxonomie-Table basierend auf der Auftrethäufigkeit einzelner Verknüpfungen der linguistischen Datenbank umfasst, wobei die Sprach- und/oder Textanalysevorrichtung ein Integrationsmodul umfasst, mittels welchem Integrationsmodul basierend auf Agglomerate von Elementen der Taxonomie-Table eine viel-dimensionale, gewichtete Inhaltsmatrix generierbar ist, wobei die Sprach- und/oder Textanalysevorrichtung mindestens ein neuronales Netzwerkmodul zum Klassifizieren und/oder Sortieren der Sprach- und/oder Textdaten basierend auf der Inhaltsmatrix umfasst, wobei mittels definierbaren Deskriptoren der Sprach- und/oder Textanalysevorrichtung entsprechende Randbedingungen für einen oder mehrere Themenkreise bestimmbar sind. Diese Ausführungsvariante hat u.a. die gleichen Vorteile wie die vorhergehende. Insbesondere ist wie oben z.B. bei der Klassifizierung einer beliebigen Dokumentenkollektion kein menschliches Vorarbeiten mehr nötig: keine Vorbereitung eines speziellen Vokabulars, keine spezielle Taxonomie, keine speziellen Thesauri und vor allem kein aufwändiges Trainieren der Dokumentenklassifizierung. Ausserdem wird das Mehrsprachigkeitsproblem konsequent gelöst (eine englische Übersetzung eines deutschen Dokuments erhält die gleiche Klassifizierung wie das deutsche Original). Dies sind direkte Folgen aus der Bezugnahme auf die linguistische Datenbank mit der universellen Taxonomie und die situativ konstruierte Projektion auf einen optimalen Inhaltsraum. Dies konnte bisher mit keinem bekannten Stand der Technik auch nur annähernd erreicht werden.

In einer Ausführungsvariante umfasst das neuronale Netzwerkmodul mindestens eine oder mehrere sebst-organisierende Kohonen-Maps. Diese Ausführungsvariante hat u.a. die gleichen Vorteile wie die vorhergehende Ausführungsvariante. Zusätzlich erlaubt das Verwenden von selbstorganisierenden Netzwerktechniken z.B. SOM bzw. Kohonen-Maps) eine weitere Automatisierung des Verfahrens.

In einer anderen Ausführungsvariante umfasst die Sprach- und Textanalysevorrichtung ein Entropiemodul zur Bestimmung eines in einem Speichermodul abspeicherbaren Entropieparameters basierend auf der Verteilung eines Datenrekords in den Sprach- und/oder Textdaten. Der Entropieparameter kann z.B. durch $\text{Entropie}_{DR} = \ln(\text{freqsum}_{DR})$ - $\Sigma\, F_{DR}\, \ln(F_{DR})/\text{freqsum}_{DR}$ gegeben sein. Diese Ausführungsvariante hat u.a. den Vorteil, dass ein zusätzlicher Relevanzparameter bestimmt werden kann. Ein Begriff, der weit verstreut über alle Sprach- und/oder Textdaten bzw. über alle Dokumente erscheint, hat eine grosse "Entropie" und wird wenig zur Unterscheidung der Dokumente beitragen. Damit kann die Entropie wesentlich zur Effizienz der erfindungsgemässen Vorrichtung bzw. Verfahrens beitragen.

In einer wieder anderen Ausführungsvariante umfasst die Vorrichtung eine der linguistischen Datenbank zugeordnete Hashtable, wobei mittels eines Hash-Wertes linguistisch verknüpfte Datenrekords in der Hashtable identifizierbar sind. Diese Ausführungsvariante hat u.a. den Vorteil, dass linguistisch verknüpfte Datenrekords wie z.B. "common", "sense" und "common sense" viel schneller und entsprechend effizienter gefunden werden können.

In einer weiteren Ausführungsvariante können mittels eines Sprachparameters z.B. die Datenrekords einer Sprache zuordbar sein und in der Taxonomie-Table als Synonym kennzeichenbar sein. Diese Ausführungsvariante hat u.a. den Vorteil, dass mittels der Sprach- und Textanalysevorrichtung auch mehrsprachige Text- oder Sprachdaten klassifizierbar und/oder sortierbar sind.

In einer Ausführungsvariante sind die Agglomerate einer n-dimensionalen Inhaltsmatrix eines n-dimensionalen Inhaltsraum zuordenbar. n kann z.B. gleich 100 sein. Es ist jedoch darauf hinzuweisen, dass jede andere beliebige natürliche Zahl ebenso für bestimmte Anwendungen sinnvoll sein kann. Diese Ausführungsvariante hat u.a. den Vorteil, dass es erst eine effiziente Zuordnung zu den selbstorganisierenden Netzwerken erlaubt, da ansonsten der Inhaltsraum zu viele Freiheitsgrade besitzt, als dass er noch aussagekräftig wäre, oder zu wenig, so dass er ebenfalls keine Aussagekraft mehr hat.

In einer anderen Ausführungsvariante umfasst die Sprach- und Textanalysevorrichtung Deskriptoren, mittels welcher definierbaren Deskriptoren entsprechende Randbedingungen für einen Themenkreis bestimmbar sind. Diese Ausführungsvariante hat u.a. den Vorteil, dass die Dokumente ins richtige globale Gebiet durch die SOM-Technik gebracht werden.

In einer weiteren Ausführungsvariante werden die Taxonknoten der Taxonomie-Table basierend auf einer universellen, themenunabhängigen linguistischen Datenbank erzeugt, wobei die Datenbank die universelle, themenunabhängige, linguistische Datenbank umfasst. Diese Ausführungsvariante hat u.a. den Vorteil, dass erstmals eine Katalogisierung und/oder Indexierung basierend auf einer nicht themenspezifischen und damit vorzudefinierenden Taxonomie vollständig automatisiert durchgeführt werden kann.

An dieser Stelle soll festgehalten werden, dass sich die vorliegende Erfindung neben dem erfindungsgemässen Verfahren auch auf eine Vorrichtung zur Ausführung dieses Verfahrens bezieht. Ferner beschränkt es sich nicht auf das genannte System und Verfahren, sondern bezieht sich ebenso auf ein Computerprogrammprodukt zur Realisierung des erfindungsgemässen Verfahrens.

Nachfolgend werden Ausführungsvarianten der vorliegenden Erfindung anhand von Beispielen beschrieben. Die Beispiele der Ausführungen werden durch folgende beigelegte Figuren illustriert:

Figur 1 zeigt ein Blockdiagramm, welches schematisch das erfindungsgemässe Verfahren und/oder System illustriert.

Figur 2 zeigt ebenfalls ein Blockdiagramm, welches die Verwendung einer erfindungsgemässen Vorrichtung in einem Netzwerk mit dezentralisierten Datenbanken und/oder Datenquellen zur thematischen Erfassung und/oder Katalogisierung und/oder Kontrolle der Datenflüsse auf dem Netzwerk illustriert.

Figur 3 zeigt ein Blockdiagramm, welches die Struktur einer Taxonomie-Table 21 illustriert.

Figur 4 zeigt ein Blockdiagramm, welches schematisch die Bildung vom Agglomerationscluster in der Taxonomie-Table illustriert.

Figur 5 zeigt ein Blockdiagramm, welches schematisch ein Beispiel des Kombinierens eines Agglomerationsclusters in Themengebiete illustriert.

Figur 6 zeigt ein Blockdiagramm, welches schematisch einen Informations-Map bzw. Kohonen-Map illustriert. Mittels der SOM-Technik mit Randbedingungen werden die zu analysierenden Dokumente, d.h. also die gesamten Text- und/oder Sprachdaten 10, durch das neuronale Netzwerkmodul 26 in ein 2-dimensionales Array von Neuronen (= Informations-Map) gruppiert.

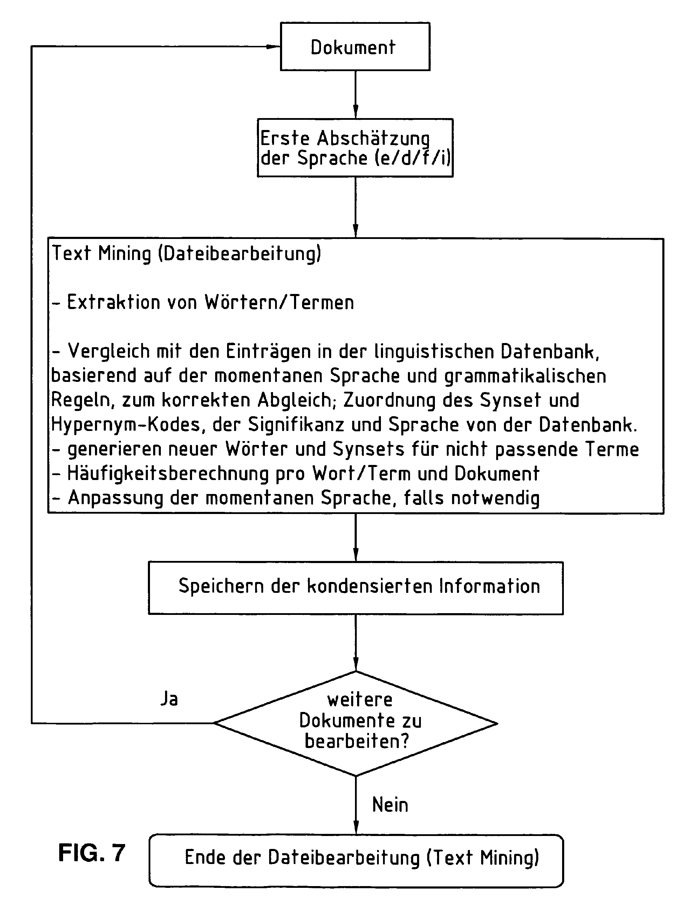

Figur 7 zeigt ein Flussdiagramm, welches Verfahrensschritte bei der initialen Analysis von Dokumentensammlungen illustriert als sog. Text Mining Step.

Figur 8 zeigt ein Schema für die Generierung von Cluster in einem Neuron. DocEps entspricht einer bestimmbaren Toleranz für das Maximum der Distanz zwischen den Mitgliedern eines Clusters.

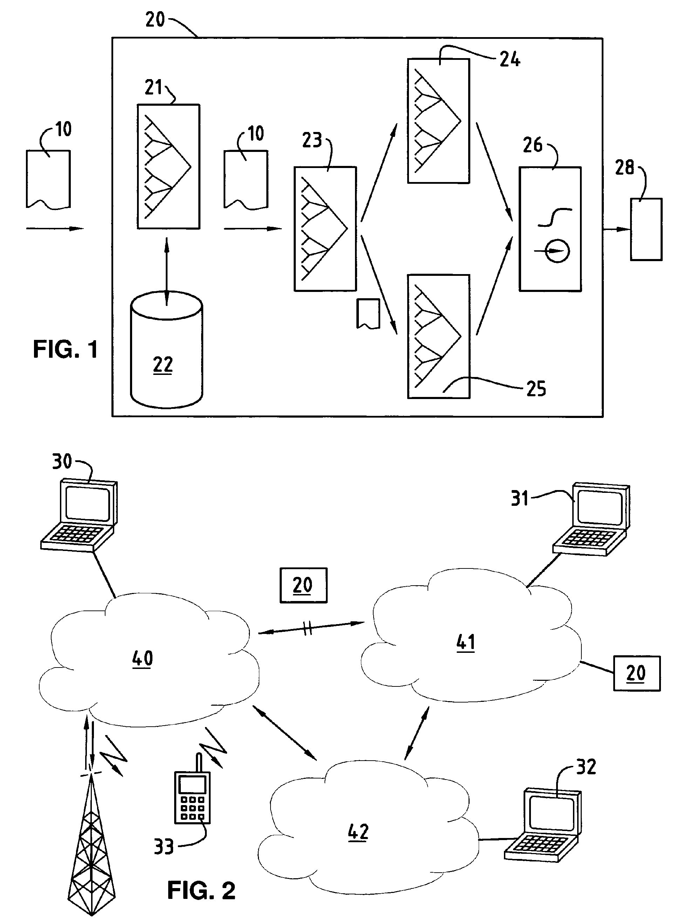

Figuren 1 bis 6 illustrieren schematisch eine Architektur, die zur Realisierung der Erfindung verwendet werden kann. In diesem Ausführungsbeispiel umfasst die Sprach- und Textanalysevorrichtung zur Bildung eines Such- und/oder Klassifizierungskataloges mindestens eine linguistische Datenbank 22 zum Zuordnen von linguistischen Begriffen zu Datenrekords. Die linguistische Datenbank 22 kann z.B. auch mehrsprachige Datenrekords umfassen. Mittels eines Sprachparameters können die Datenrekords einer Sprache zuordenbar sein und z.B. in der Taxonomie-Table 21 als Synonym kennzeichenbar sein. Der linguistischen Datenbank 22 kann z.B. eine Hashtable zugeordnet sein, wobei mittels eines Hash-Wertes linguistisch verknüpfte Datenrekords in der Hashtable identifizierbar sind. Mittels der Sprach- und Textanalysevorrichtung sind Sprach- und/oder Textdaten 10 entsprechend der Datenrekords klassifizierbar und/oder sortierbar. Die linguistischen Begriffe umfassen mindestens Schlagworte und/oder Suchbegriffe. Es ist wichtig darauf hinzuweisen, dass die Sprach- und/oder Textdaten auch Daten ganz allgemeiner Art, wie z.B. Multimediadaten umfassen können, d.h. u.a. digitale Daten wie Texte, Graphiken, Bilder, Karten, Animationen, bewegte Bilder, Video, Quicktime, Tonaufnahmen, Programme (Software), programmbegleitende Daten und Hyperlinks oder Verweise auf Multimediadaten. Dazu gehören z.B. auch MPx (MP3) oder MPEGx (MPEG4 oder 7) Standards, wie sie durch die Moving Picture Experts Group definiert werden.

Die Sprach- und Textanalysevorrichtung umfasst eine Taxonomie-Table 21 mit variablen Taxonknoten. Ein oder mehrere Datenrekords sind einem Taxonknoten in der Taxonomie-Table 21 zuordbar. Jeder Datenrekord umfasst einen variablen Signifikanzfaktor zur Wertung der Begriffe basierend mindestens auf Füllworten und/oder Verbindungsworten und/oder Schlagworten. Die Sprach- und Textanalysevorrichtung umfasst ein Gewichtungsmodul 23. Jedem Taxonknoten ist zusätzlich ein Gewichtungsparameter zum Erfassen von Auftrethäufigkeiten von Begriffen innerhalb der zu klassifizierenden und/oder sortierenden Sprach- und/oder Textdaten 10 zugeordnet abgespeichert. Die Sprach- und/oder Textanalysevorrichtung umfasst ein Integrationsmodul 24 zum Bestimmen einer vordefinierbaren Anzahl Agglomerate basierend auf den Gewichtungsparametern der Taxonknoten in der Taxonomie-Table 21. Ein Agglomerat umfasst mindestens ein Taxonknoten. Die Agglomerate können z.B. einen n-dimensionalen Inhaltsraum bilden. Als Ausführungsbeispiel kann n z.B. gleich 100 gewählt sein. Die Sprach- und/oder Textanalysevorrichtung umfasst mindestens ein neuronales Netzwerkmodul 26 zum Klassifizieren und/oder Sortieren der Sprach- und/oder Textdaten 10 basierend auf den Agglomeraten in der Taxonomie-Table 21. Das neuronale Netzwerkmodul 26 kann z.B. mindestens eine Topological Feature Map (TFM), wie beispielsweise eine selbst-organisierende Kohonen-Map umfassen. Mittels definierbaren Deskriptoren können z.B. entsprechende Randbedingungen für einen Themenkreis bestimmbar sein.

Die Sprach- und Textanalysevorrichtung kann zusätzlich z.B. ein Entropiemodul 25 zur Bestimmung eines in einem Speichermodul abspeicherbaren Entropieparameters basierend auf der Verteilung eines Datenrekords in den Sprach- und/oder Textdaten 10 umfassen. Das Entropiemodul 25 kann z.B. softwaremässig und/oder hardwaremässig realisiert sein. Der Entropieparameter kann beispielsweise durch

$$Entropie_{DR} = \ln(freqsum_{DR}) - \Sigma\, F_{DR}\, \ln(F_{DR})/freqsum_{DR}$$

gegeben sein. Die Resultate, d.h. der Output kann z.B. auf einer Ausgabeeinheit 28 für einen Benutzer z.B. auch über ein Netzwerk 40,41,42 dargestellt werden.

Für die Analysis und Suchfunktionen können die zu analysierenden Text- oder Sprachdaten, wie z.B. ein reines Textdokument, in die folgenden Komponenten aufgeteilt werden: a) Ein n-dimensionaler Vektor zum Charakterisieren des thematischen Inhalts des Dokumentes. n kann z.B. als n = 100 gewählt sein; b) m Deskriptoren, welche charakteristisch für ein Dokument sind und Randbedingungen bei der Optimierung stellen. Die Zahl der Deskriptoren kann z.B. m = 20 sein; c) Ein Set von Metadaten, die automatisch aus dem Dokument extrahiert werden können, d.h. z.B. Titel des Dokumentes, Autor, Erstellungsdatum des Dokumentes, Ort bzw. Adresse des Dokumentes wie eine URL (Unified Resource Location), File-Format PDF (Portable Document Format), Microsoft Word, HTML (Hyper Text Markup Language), HDML (Handheld Device Markup Language), WML (Wireless Markup Language) VRML (Virtual Reality Modeling Language), XML (Extensible Markup Language), JPEG (Joint Photographic Experts Group) etc.), MPEG (Moving Picture Experts Group), Anzahl Worte und/oder Begriffe, Anzahl integer und/oder rationaler Zahlen, Sprache der Mehrheit der Begriffe im Dokument, zusätzliche Regeln oder Charakteristiken etc..

Die Achsen des n-dimensionalen Inhaltsraums hängen von der thematischen Zusammenstellung und/oder inneren Zusammenhängen der gesamten zu analysierenden Sprach- und/oder Textdaten 10 ab. Die Achsen können sinnvollerweise so konstruiert sein, dass die relevanten Themenbereiche der Sprach- und/oder Textdaten 10 so gut wie möglich wiedergegeben werden und irrelevanter Hintergrund (Noise) nicht dargestellt wird oder stark unterdrückt wird. Das Generieren der Achsen und die Projektion basieren auf der erwähnten linguistischen und z.B. mehrsprachigen Datenbank 22, die einer universellen Taxonomie bzw. einem universellen Taxonomie-Baum zugeordnet ist. Universell heisst, dass nicht bereits vor der Katalogisierung und/oder Indexierung der Text- und/oder Sprachdaten 10 ein bestimmtes Gebiet mittels der Taxonomie vorgegeben werden muss. Dies war im Stand der Technik bis jetzt nicht so möglich.

Worte, Begriffe und/oder Terme, die in einem Textdokument auftreten, werden mit einer grossen Liste von Worten verglichen, die in der linguistischen Datenbank 22 gespeichert sind. Unter "Terme" sollen in diesem Zusammenhang zusammengesetzte Worte wie z.B. die Begriffe "nuclear power plant", "Commision of Human Rights", "Europäisches Patentamt" oder "Office européen des brevets" verstanden werden. Im Ausführungsbeispiel für so eine linguistische Datenbank 22 wurden 2.2 Millionen Einträge als genügend gefunden für die Sprachen Englisch, Französisch, Deutsch und Italienisch, die Datenbank 22 kann natürlich für ein Funktionieren aber auch beliebig mehr oder weniger Einträge umfassen. Worte/Terme mit der gleichen Bedeutung (Synonyme) können z.B. in Synonym Gruppen (Synsets) zusammengefasst werden, beispielsweise auch für alle Sprachen gemeinsam. Diese Synsets werden dann einem Taxonknoten in der hierarchischen Taxonomie-Table oder Taxonomie-Baum zugeordnet. Die Verteilung der Taxonknotenhits (Einträge) für bestimmte Sprach- und/oder Textdaten 10 bzw. ein zu analysierendes Dokument ist ein zuverlässiges Mass für seinen thematischen Inhalt.

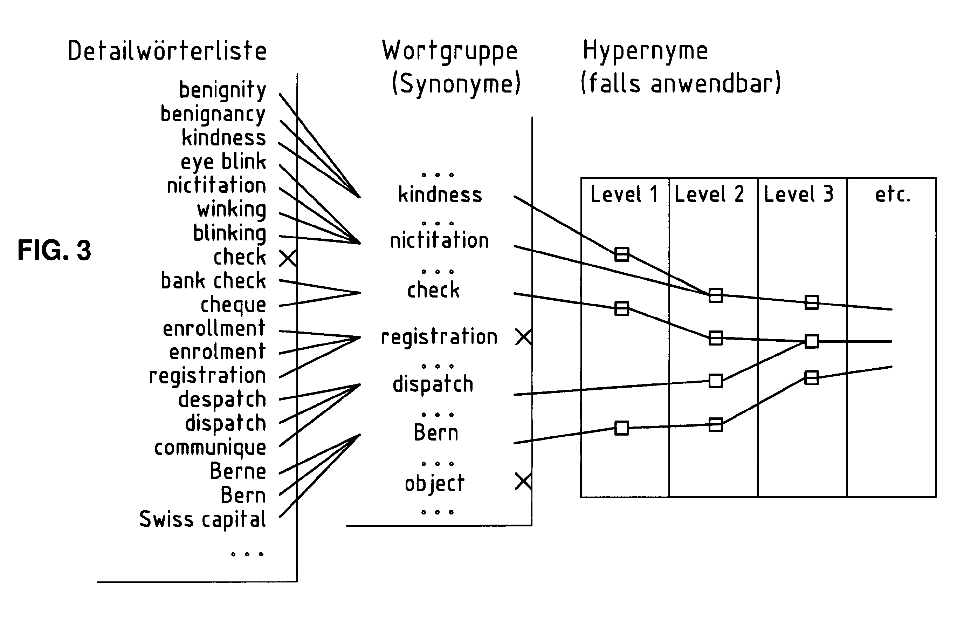

Figur 3 zeigt eine solche Struktur einer Taxonomie-Table 21. Beispielsweise können für jede Sprache Einträge wie folgt strukturiert sein:

| Spalte | Format | Inhalt |
|--------|--------|--------|
| 1 | N | Klassifizierungscode (z.B. dezimal) für den Taxonknoten (universeller Code für alle Sprachen) |
| 2 | T35 | Benennung des Taxonknotens (Hyperonym/Oberbegriff) |
| 3 | N1 | Hierarchiestufe im Taxonomie-Baum |
| 4 | N1.3 | Statistisches Gewicht des Knotens (Bestimmt mittels globaler Entropie speziell für lange inhaltsreiche Dokumentensammlungen) |

| Spalte | Format | Inhalt |
|--------|--------|--------|
| 1 | N6 | Synset Code (für alle Sprachen gleich) |
| 2 | N2 | Sequentielle Nummer innerhalb eines Synsets und einer Sprache (0 kann z.B. einem Hauptbegriff innerhalb der Gruppe pro Sprache entsprechen) |
| 3 | N1 | Typ des Begriffes oder Terms (1 = Substantiv / 2 = Verb / 3 = Adjektive / 4 = Adverb, Pronomen etc. / 5 = Name) |
| 4 | N1 | Signifikanz des Begriffes/Wortes (0 = Füllwort ["glue" word] / 1 = tiefe Signifikanz / 2 = mittel / 3 = hoch / 4 = sehr hohe Signifikanz) |
| 5 | N | 64-bit hash-Wert für eine beschleunigte Identifikation von Termen (aus mehreren Worten zusammengesetzter Begriff) |
| 6 | T35 | Begriff/Term |

(fortgesetzt)

| Spalte | Format | Inhalt |
|---|---|---|
| 7 | N | Hyperonym Code (Zuordnung zu einem Taxonknoten in der Taxonomie-Table mit einer (z.B. dezimal) Klassifikation) |
| 8 | N1 | Sprachcode (0 = sprachenunabhängiger Name / 1 = Englisch / 2 = Deutsch / 3 = Französisch / 4 = Italienisch) |
| 9 | N2 | Flag für Begriffe/Terme, die in mehr als einem Synset (Synonym Gruppe) erscheinen* |

*) Der Begriff "Gift" existiert in Englisch und Deutsch, hat jedoch in den beiden Sprachen vollständig unterschiedliche Bedeutung.
Zusätzlich existieren Begriffe mit unterschiedlicher Bedeutung in der gleichen Sprache. Das englische Wort "fly", z.B. wird in seiner Bedeutung als "flight" oder in seiner Bedeutung als "trousers fly" verwendet. Der Begriff "window" bedeutet eine Öffnung/Fenster, aber "windows" kann sich auf eine Öffnung oder ein Betriebssystem beziehen. "Windows XP" anderseits ist wiederum einzigartig.

Die Verfahrensschritte für eine erste Analysis der Sprach- und/oder Textdaten 10 kann z.B. wie folgt aussehen: (1) Eingabe eines Dokumentes, d.h. von Sprach- und/oder Textdaten 10; (2) Eine erste Einschätzung des Dokumentes; (3) Text Bearbeitung: i) Extraktion des Begriffes/Termes. ii) Vergleich mit den Eintragungen in der linguistischen Datenbank unter Berücksichtigung der entsprechenden Sprache und lexikalischen Regeln für die korrekte Zuordnung. Generierung des Synsets und Hyperonym Codes, der Signifikanz und Sprache mittels der Datenbank. iii) Generieren neuer Begriffe und/oder Synsets für nicht gefundene Begriffe oder Terme. iv) Bestimmung der Häufigkeit des Begriffes/Termes pro Dokument. v) Anpassung der Sprache, falls notwendig; (4) Zugeordnet Abspeichern der Informationen; (5) Nächstes Dokument bzw. nächste Sprach- und/oder Textdaten 10.

Zum Bestimmen der Entropie und eines Relevanzindex pro Synset (Synonym Gruppe) wird für jedes Synset (isyn) und jede Sprache und/oder Textdaten 10 bzw. Dokument (idoc) die Häufigkeit berechnet basierend auf:

$$F_{isyn}(idoc) = norm(idoc) \sum_{word \,\in\, isyn} f_{word} \cdot sig_{word},$$

wobei $f_{word}$ = Frequenz des Wortes in idoc; $sig_{word}$ = Signifikanz des Wortes basierend auf der linguistischen Datenbank (0,...,4)

$$norm(idoc) = \frac{min(gewichtete\ Anzahl\ Begriffe\ in\ idoc,\ 500)}{gewichtete\ Anzahl\ Begriffe\ in\ idoc}$$

Das Gewicht ist gegeben durch $sig_{word}$.

Der Faktor norm(idoc) kann z.B. eingeführt werden um zu verhindern, dass sehr grosse Dokumente vorherrschend für eine bestimmte Datenzusammenstellung werden. Der Faktor kann z.B. empirisch bestimmt werden.

Die informationstheoretische Entropie eines Synsets isyn kann damit bestimmt werden durch:

$$Entropy_{isyn} = log(freqsum_{isyn}) - \sum_{idoc} F_{isyn}() \cdot log(F_{isyn}())/freqsum_{isyn}$$

wobei: $$freqsum_{isyn} = \sum_{idoc} F_{isyn}()$$

Ein Synset, das weit verstreut über alle Sprach- und/oder Textdaten 10 bzw. über alle Dokumente erscheint, hat eine grosse "Entropie" und wird wenig zur Unterscheidung der Dokumente beitragen. Z.B. falls Dokumente/Artikel einer Datenbank der Neuen Zürcher Zeitung analysiert werden sollen, ist klar, dass "Neue Zürcher Zeitung" in allen oder vielen Artikel erscheinen wird, ohne jedoch eine Unterscheidungskraft für den Inhalt der Dokumente zu besitzen. Als Mass für eine generelle Relevanz eines Synset *isyn* kann z.B. der Term "Relevanz Index" $RI_{isyn}$ definiert werden durch

$$RI_{isyn} = freqsum_{isyn} / Entropy_{isyn}$$

Zum Bestimmen der Achsen des n-dimensionalen (in diesem Ausführungsbeispiel wurde n = 100 gewählt) Inhaltsraumes wird die Relevanz eines Hyperonyms (Taxonknoten in der Taxonomie-Table 21) bestimmt, indem über allen Relevanzindizes die gesamten zu analysierenden Text- und/oder Sprachdaten 10 integriert werden. Diese Relevanz ist ein Mass für die totale Trefferhäufigkeit eines Taxonknotens durch die gesamten Text- und/oder Sprachdaten 10. Dieses Mass zeigt an, welches Themengebiet und/oder Themengebiete in einer Dokumentensammlung vorherrschend ist. Theoretisch kann jeder Taxonknoten einer Achse im Inhaltsraum zugeordnet werden. Dies würde z.B. in einem Inhaltsraum mit einer Dimension grösser als 4000 resultieren, was einem ungeheuren Overhead entsprechen würde und zudem viel zu vielen Freiheitsgraden für eine Inhaltsbestimmung.

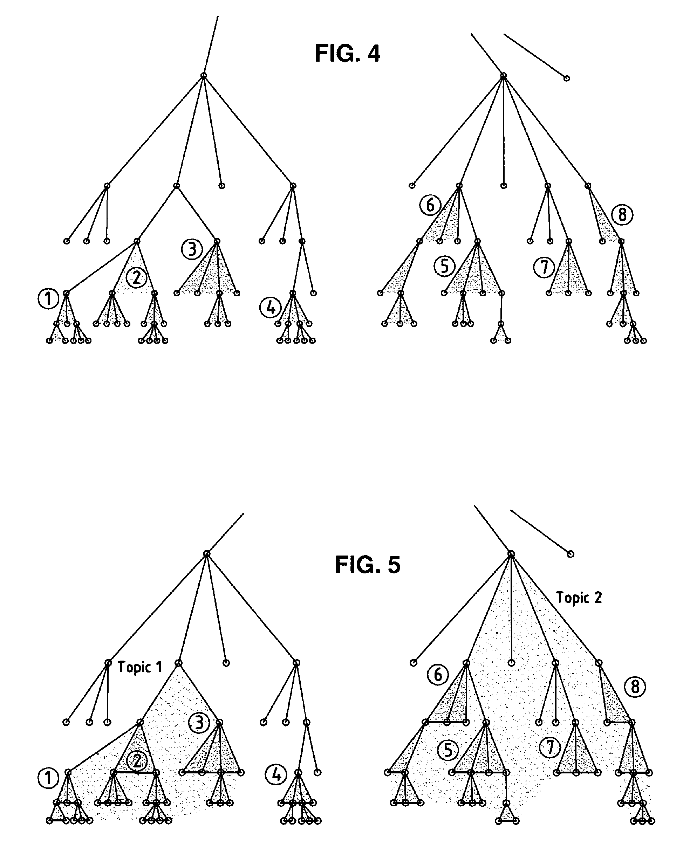

Aus diesem Grund können die Taxonknoten z.B. geclustert werden, beispielsweise in n-2 (z.B. n-2 = 98) unterschiedliche Clusters, wie z.B. durch die Bedingung, dass die kumulierte Relevanz des "Mutterknotens" eines Clusters von Taxonknoten und all seine Unterknoten mindestens einen vordefinierbaren Schwellwert (z.B. 0.5%) der gesamten Relevanz entspricht. Der Cluster wird gebildet auf dem tiefst möglichen Niveau des Taxonomie-Baumes bzw. der Taxonomie-Table. Dieses Verfahren kann z.B. verglichen werden mit der Bildung von Agglomeraten in einer Demographie. Jeder Cluster (mit all den entsprechenden Synsets, die auf ihn verweisen) wird einer Achse in dem n-dimensionalen Inhaltsraum zugeordnet. Achse n-1 wird z.B. für Synsets benutzt, die nicht auf einen der Agglomerationscluster verweisen und die Achsen n sind für Zahlen reserviert. Figur 4 zeigt schematisch die Bildung von solchen Agglomerationsclustern in der Taxonomie-Table.

Schliesslich werden z.B. *ntop* Themengebiete gebildet, welche jede aus einer bestimmten Untergruppe von Agglomerationsclustern (ntop kann z.B. in der Grössenordnung von 10-20 liegen) zusammengesetzt sind. Die Agglomerate werden derart gebildet, dass die Taxonknoten von einem Agglomerationscluster, welcher zum gleichen Themengebiet (Topics) gehört, einen gemeinsamen Mutterknoten in der Hierarchie der Taxonomie-Table besitzen. Die daraus resultierende Transformationsregel kann z.B. wie folgt lauten: Jedes Synset verweist auf eine der ausgewählten Agglomerationscluster, entsprechend einer Achse im Inhaltsraum oder einer Achse n-1. Eine grosse Anzahl von Synsets verweisen wiederum zu einem der *ntop* Themengebiete auf einem höheren Aggregationsniveau. Figur 5 zeigt ein Beispiel des Kombinierens eines Agglomerationsclusters in Themengebiete.

Zur Projektion der zu analysierenden Dokumente, d.h. der Sprach- und/oder Textdaten 10, auf den n-dimensionalen Inhaltsraum, kann z.B. für jedes Dokument *idoc* die Vektorkomponente $c_i$ für die i-te Achse des Inhaltsraumes definiert werden durch:

$$c_i = log(1+w_i)$$

wobei

$$w_i = \sum_{\forall Synsets_{Achse_i}} F_{isyn}(idoc)$$

wobei $F_{isyn}(idoc)$ durch die obige Formel gegeben ist.

Die Einheit (Metrik) für den n-dimensionalen Raum wird mittels der gesamten Entropie aller Synsets bestimmt, die auf eine Achse i verweisen ($\forall Synsets_{Achse_i}$), wobei die gesamte Entropie auf eine analoge Art bestimmt werden kann, wie die oben definierte Entropie der Synsets. Die Gewichte $g_i$ für die i-te Komponente können dann z.B. bestimmt werden durch:

$$g_i = 1 / (\text{gesamte Entropie der } i\text{-ten Komponente})$$

Mit dieser Definition bekommen z.B. Komponenten mit einer tiefen Entropie (d.h. mit einem tiefen Verteilungsgrad (high discrimination effect)) ein entsprechend hohes Gewicht.

Für die Wahl der m typischsten Deskriptoren eines Dokumentes, d.h. bestimmter Sprach- und/oder Textdaten 10 wird für jedes Synset isyn im Document *idoc* ein Synset Relevanzwert $Relev_{isyn}$ bestimmt werden, beispielsweise durch:

$$Relev_{isyn}(idoc) = (ln(1+F_{isyn}(idoc)) \, / \, ln(1+ freqsum_{isyn}) \, ) \, / \, Entropy_{isyn}$$

Die m Synsets mit dem höchsten Relevanzwert $Relev_{isyn}$ können z.B. als die m Deskriptoren ausgewählt werden, die am typischsten für ein Dokument *idoc* sind. Diese Deskriptoren, die z.B. ihren entsprechenden Hyperonymen zugeordnet abgespeichert sein können, werden zur Katalogisierung und/oder Indexierung verwendet. Sie umfassen die wichtigsten Charakteristiken eines Dokumentes sogar in diesen Fällen, in welchen die Projektion auf den Inhaltsraum in nicht-optimaler Weise durch den Inhalt eines spezifischen Dokumentes wiedergegeben ist.

Zum automatisierten Katalogisieren und/oder Indexieren wird das oben erwähnte Verfahren, das auf dem erwähnten statistischen und/oder linguistischen Analyseverfahren beruht, mit einem oder mehreren neuronalen Netzwerkmodul 26 kombiniert. Das statistische und/oder linguistische Analyseverfahren verwendet, wie beschrieben, eine umfassende universelle Taxonomie-Table 21 zur Erkennung des thematischen Inhaltes. Um nun einen Überblick über die gesamten Text- und/oder Sprachdaten 10, d.h. aller zu analysierenden Dokumente *idoc* zu erhalten, zum anderen um eine Funktion zum Ähnlichkeitsvergleich zu generieren, werden die Resultate der linguistischen Analysis mit neuronalen Netzwerk Technologien kombiniert. Es hat sich gezeigt, dass sog. Self-Organizing-Map (SOM) Techniken, z.B. von Kohonen, äusserst geeignet sein können. Hingegen ist dem Fachmann klar, dass auch andere neuronale Netzwerktechniken für bestimmte Anwendungen sinnvoll sein können bzw. geeigneter, ohne dadurch den Schutzumfang des Patentes in irgendeiner Art einzuschränken.

Die SOM-Technik kann auf das beschrieben Projektionsverfahren der zu analysierenden Text- und/oder Sprachdaten 10, d.h. die Dokumente *idoc*, auf den n-dimensionalen Inhaltsraum (z.B. n = 100), angewendet werden. Bevor die neuronalen Netzwerkiterationen mittels des neuronalen Netzwerkmoduls 26 (unsupervised learning) gestartet werden, kann z.B. ein grobes Ausgleichsverfahren für die Gruppe verwendet werden, um eine zuverlässige Anfangsschätzung für die SOM-Technik zu erhalten. Dieses Verfahren kann den Iterationsprozess wesentlich beschleunigen und kann das Risiko minimieren, dass die SOM-Technik in einer nicht optimalen Konfiguration (z.B. lokales Minimum) endet. Für den SOM Algorithmus kann die Distanz zwischen zwei Vektoren (Dokumenten *idoc*) a und b z.B. bestimmt werden durch:

$$Distanz = \sqrt{\sum_i g_i \left( \frac{a_i}{\| a \|} - \frac{b_i}{\| b \|} \right)^2} + KL_{a,b}$$

wobei $KL_{a,b}$ die Kullback-Leibler Distanz zwischen zwei Dokumenten im folgenden Sinne ist, dass die Zuweisung eines Dokumentes *idoc* mittels eines Inhaltsvektors c zu einem Themengebiet jtop gemessen wird mit

$$h_{jtop,c} = \sqrt{VectorPart + DescriptorPart + ErrMS}$$

mit

$$VectorPart = \sum_{\forall Komponenten_{jtop}} g_i \left( \frac{c_i}{\| c \|} \right)^2$$

wobei $\forall Komponenten_{jtop}$ allen Komponenten, die auf *jtop* verweisen, entspricht.

$$DescriptorPart = \sum_{\forall Deskriptoren_{jtop}} \left( \mathrm{Re}\, lev_{isyn}(idoc) \right)^2$$

Wobei wieder $\forall Deskriptoren_{jtop}$ allen Deskriptoren, die auf jtop verweisen, entspricht. *ErrMS* ist die Schätzung des mittleren quadratischen Fehlers (Abweichung) mit z.B. *ErrMS* $\geq 10^{-5}$. Die normalisierten Massen

$$P_{jtop,c} = h_{jtop,c} / \sum_{itop} h_{itop}$$

können z.B. als Wahrscheinlichkeiten interpretiert werden, dass das Dokument *idoc* zu einem bestimmten Themengebiet jtop gehört. Die Kullback-Leibler Distanz zwischen zwei Dokumenten *idoc* und *kdoc* mit den Inhaltsvektoren a und b ist z.B. gegeben durch

$$KL_{a,b} = \frac{1}{ntop} \sum_{jtop} \left( P_{jtop,a} - P_{jtop,b} \right) \ln\left( P_{jtop,a} / P_{jtop,b} \right)$$

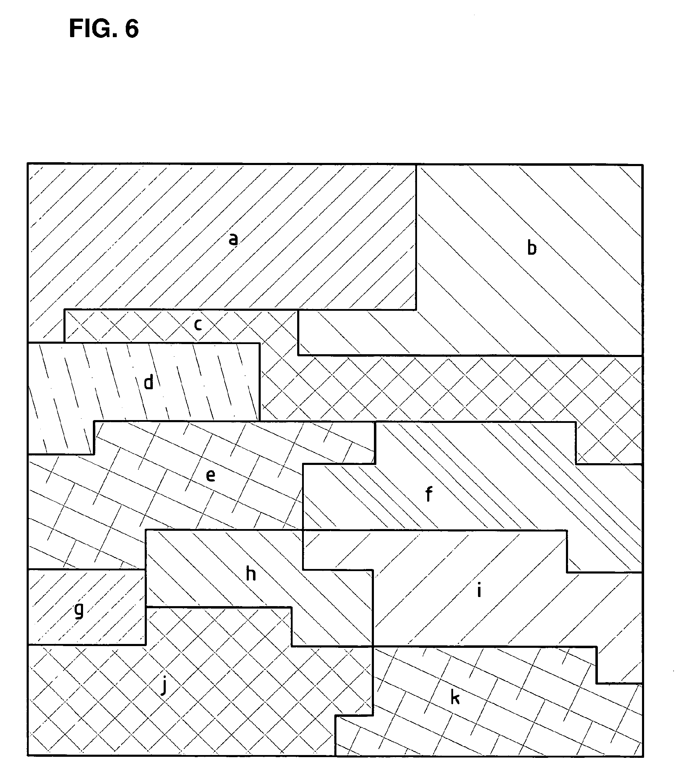

Der Kullback-Leibler Teil in der gesamten Distanz beinhaltet, dass die Dokumente in das richtige globale Gebiet durch die SOM-Technik gebracht werden. Somit wirkt Kullback-Leibler Teil als Randbedingung für die SOM-Technik. Der metrische Teil in der gesamten Distanz hingegen ist für lokales Platzieren in den individuellen Neuronen eines Themengebietes verantwortlich. Mittels der SOM-Technik mit Randbedingungen werden die zu analysierenden Dokumente, d.h. also die gesamte Text- und/oder Sprachdaten 10, durch das neuronale Netzwerkmodul 26 in ein 2-dimensionales Array von Neuronen (=Informations-Map) gruppiert. Figur 6 zeigt das Resultat einer solchen Informations-Map bzw. Kohonen Map. Die Dokumente in einem Neuron sind damit ähnlich zueinander, was ihr thematischer Inhalt betrifft. Die Neuronen werden derart gruppiert, dass sie im globalen Themengebiet liegen, zu welchem sie hauptsächlich zugeordnet sind und thematisch zusammenhängende Neuronen liegen nahe beieinander (siehe Figur 6 mit den thematischen Gebieten a,....,k).

Im Vergleichs- und Wertungsverfahren kann eine Suchabfrage z.B. aus ein paar Suchbegriffen oder einem Textdokument in einer natürlichen Sprache sein. Der Suchtext kann z.B. den ganzen Inhalt eines Dokumentes umfassen, um in der indexierten und/oder katalogisierten Dokumentensammlung nach ähnlichen Dokumenten zu suchen. Der Suchtext kann aber auch z.B. nur einen kleinen Teil des relevanten Dokumentes beinhalten. Aus diesem Grund kann unter Umständen die metrische Distanz zwischen dem Suchtext und den Dokumenten kein zuverlässiges Kriterium zum Finden der Dokumente sein, welche dem Suchtext am nächsten sind. Ein zuverlässigeres Mass für den Vergleich und das hierarchische Werten wird durch das Skalarprodukt der Inhaltsvektoren erzeugt. Solch ein Mass garantiert, dass die gemeinsamen Teile zwischen dem Suchtext und den Dokumenten wirksam berücksichtigt werden. Ein Ähnlichkeitsmass zwischen dem Suchtext und einem Dokument kann z.B. definiert werden durch

$$\text{Ähnlichkeit} = \sum_i \frac{q_i \cdot c_i}{\|q\| \cdot \|c\|} + \text{DescrSim}$$

wobei q der Inhaltsvektor des Suchtextes, c der Inhaltsvektor des Neurons, in welchem das Dokument platziert ist und *DescrSim* das Mass für die Ähnlichkeit zwischen den m Deskriptoren des Suchtextes und dem Dokument (z.B. m = 20) ist, wie weiter unten beschrieben wird. Der Term *DescrSim* umfasst die gewichtete Summe von unterschiedlichen Deskriptor-Paaren, wobei Paare mit identischen Deskriptoren im Suchtext und dem gesuchten Dokument z.B. auf 100 Punkten gewichtet werden können. Paare mit Deskriptoren, die sich auf ein gemeinsames Hyperonym (Taxonknoten in der Taxonomie-Table) beziehen, können z.B. gewichtet werden mit 30 Punkten, falls der gemeinsame Taxonknoten der direkte Taxonknoten der Deskriptoren ist, mit 10 Punkten, falls der gemeinsame Taxonknoten eine Hierarchiestufe darüber ist, 3 Punkte, wenn der gemeinsame Taxonknoten zwei Hierarchiestufen darüber ist und 1 Punkt, wenn der gemeinsame Taxonknoten drei Hierarchiestufen darüber ist. Mit $Relev_{isyn}()$ als Relevanzwert der Deskriptoren in einem Dokument kann z.B. bestimmt werden, dass

$$DescrSim = \frac{0.01}{S_{norm}} \sum_{Paare} (\text{Gewichtung für Paare isyn}_1/\text{isyn}_2) \cdot weight_{isyn_1,isyn_2}$$

wobei

$$weight_{isyn_1,isyn_2} = \text{Re}\,lev_{isyn_1}(Suchtext) \cdot \text{Re}\,lev_{isyn_2}(Dokument)$$

$$S_{norm} = (m/m1) \; \bullet \sum_{Paare} weight_{isyn_1,isyn_2}$$

mit $m1$ = Anzahl übereinstimmender Paare ($m1 \leq m$). Das Skalarprodukt im wie oben definierten Ähnlichkeitsmass entspricht der Ähnlichkeit zwischen einem Neuron (Teilsammlung der Dokumente) und dem Suchtext. Der Term *DescrSim* quantifiziert die Details für die individuellen Dokumente in einem gegebenen Neuron. Der Faktor "0.01" in der Definition von *DescrSim* kann z.B. auf einer empirischen Basis bestimmt werden. Er kann z.B. derart bestimmt werden, dass das Skalarprodukt (Cross Positioning) und die individuellen Erweiterungen (DescrSim) in eine ausgeglichene Form geteilt sind.

Für den Vergleich und die Wertung mit dem oben definierten Ähnlichkeitsmass ist das Vergleichsverfahren klar. Es werden z.B. die *nDoc* Dokumente gefunden werden, die einem bestimmten Suchtext am nächsten sind. Zuerst wird der Teilbereich mit den Neuronen mit den höchsten Skalarprodukten gesucht, bis die Zahl der ausgewählten Dokumente z.B. den Grenzwert von 3·*nDoc* überschreitet. Die selektierten Dokumente werden dann nach ihren Ähnlichkeitswerten (einschliesslich der Erweiterung *DescrSim*) in absteigender Ordnung sortiert. Die ersten *nDoc* Dokumente bilden das gewünschte Dokument in der Wertungsordnung. Für den Fall, dass die thematische Such keinen Sinn ergibt, d.h. z.B., wenn die Suchabfrage nur aus wenigen Worten zusammengesetzt ist, die zu keinem Unterscheidungsinhalt beitragen, dann kann die Auswahl erreicht werden, indem z.B. der Suchindex für die individuellen Synsets innerhalb eines Dokumentes verwendet werden. Das weiter oben definierte Ähnlichkeitsmass kann sich z.B. von 0 bis 2 erstrecken. Die Transformation in einen Wertungsprozentsatz kann z.B. erreicht werden mit

$$Wertungsprozentsatz = \left(\frac{\ddot{A}hnlichkeit}{2}\right)^{1/3} \cdot 100\%$$

Die Erkennung von Dokumentenderivativen bedeutet das Identifizieren von Clusters von Dokumenten, deren Inhalt fast identisch sind. Dies können z.B. unterschiedliche Kopien des gleichen Dokumentes mit kleinen Änderungen sein, wie es z.B. für Patenttexte einer Patentfamilie gelten kann, deren Text und/oder Schutzbereich je nach Land leicht variieren kann. Die erfindungsgemässe Vorrichtung und/oder das Verfahren erlaubt das automatisierte Identifizieren von Dokumentenclusters mit beinahe identischen Dokumenten. Weiter erlaubt sie die Möglichkeit, ältere Dokumentversionen zu unterdrücken und kann ein Tool sein, um solche Dokumentensammlungen zu verwalten und up-to-date zu halten (z.B. mittels eines regelmässigen Clean-Up).

Bei der Clusteridentifikation kann z.B. das Ähnlichkeitsmass, das zum Vergleich und/oder Wertung der Dokumente für einen Suchtext verwendet wird, unter Umständen keine befriedigenden Resultate zum Entdecken solcher Dokumentencluster liefern. Für das Dokumentenclustering wird die Distanz zwischen zwei Dokumenten $idoc_1$ und $idoc_2$ mit ihren Inhaltsvektoren $a$ und $b$ gemessen durch

$$DocDist = \sqrt{\sum_i g_i \left(\frac{a_i}{\|a\|} - \frac{b_i}{\|b\|}\right)^2} + DescrDist$$

wobei *DescrDist* die gewichtete Summe der Ableitung der Deskriptoren ist. Dabei kann z.B. bestimmt werden, dass passende Deskriptorpaare von zwei Sets von *m* Deskriptoren (z.B. m=20) nichts beitragen, während nicht zusammenpassende Descriptorpaare mit 1 Punkt gewichtet werden, falls sie einen direkten gemeinsamen Taxonknoten besitzen, mit 2 Punkten, falls sie einen gemeinsamen Taxonknoten in einer Hierarchiestufe darüber besitzen und 5 Punkte für die übrigen Fälle. Mit $Relev_{isyn}()$ als Relevanzwert der Deskriptoren innerhalb eines Dokumentes kann z.B. bestimmt werden, dass

$$DescrDist = \frac{0.1}{D_{norm}} \sum_{Paare} (\text{Ergebnis für Paare } isyn_1/isyn_2) \cdot Relev_{isyn_1}(idoc_1) \cdot Relev_{isyn_2}(idoc_2)$$

mit

$$D_{norm} = \sum_{Paare} \mathrm{Re}\,lev_{isyn_1}(idoc_1)\mathrm{Re}\,lev_{isyn_2}(idoc_2)$$

Der Faktor "0.1" in der Definition von *DescDist* kann z.B. auf empirische Weise bestimmt werden, z.B. indem die metrische Distanz und die Ableitungen der Deskriptoren in einer ausgeglichenen Art gegeneinander gewichtet werden.

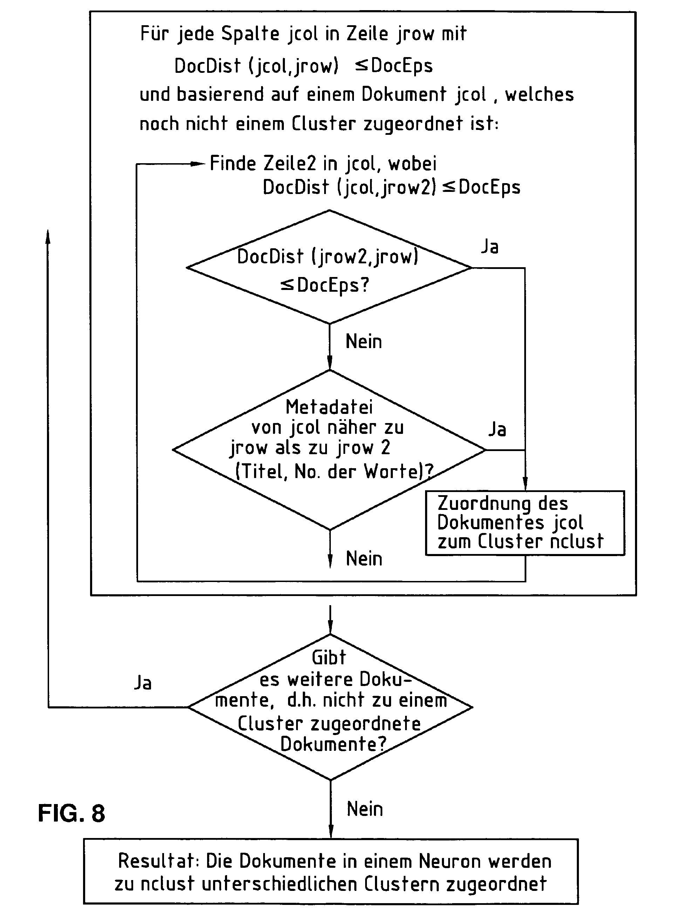

Der SOM-Algorithmus mit Randbedingungen garantiert, dass die Kandidaten für einen bestimmten Dokumentencluster im gleichen Neuron platziert werden. In dieser Art kann das Clustering für jedes Neuron einzeln erreicht werden. Für die Dokumente innerhalb eines Neurons kann z.B. die Distanzmatrix mit *DocDist*, wie oben beschrieben, bestimmt (Symmetrische Matrix mit alle 0 Elementen in der Diagonale) werden. Figur 8 zeigt ein Schema für die Generierung von Cluster in einem Neuron. *DocEps* entspricht einer bestimmbaren Toleranz für das Maximum der Distanz zwischen den Mitgliedern eines Clusters.

Es ist darauf hinzuweisen, dass die vorliegende Erfindung nicht nur als Sprach- und Textanalysevorrichtung 20 zur Bildung eines Such- und/oder Klassifizierungskataloges verwendet werden kann. Die Anwendungen sind in jeder Hinsicht vielfältig. So ist es z.B. möglich, Daten innerhalb eines oder mehrerer Netzwerke 40,41,42, wie z.B. dem Internet, automatisiert zu erkennen und einem Gebiet zuzuordnen. Dies war im Stand der Technik bis jetzt nicht möglich, da das Verwenden einer universellen Taxonomie-Table in Zusammenhang mit automatisiertem Katalogisieren und/oder Indexieren nicht möglich war. Die Kommunikationsnetze 40,41,42 umfassen beispielsweise ein GSM- oder ein UMTS-Netz, oder ein satellitenbasiertes Mobilfunknetz, und/oder ein oder mehrere Festnetze, beispielsweise das öffentlich geschaltete Telefonnetz, das weltweite Internet oder ein geeignetes LAN (Local Area Network) oder WAN (Wide Area Network). Insbesondere umfasst es auch ISDN- und XDSL-Verbindungen. Benutzer können z.B. mit irgendwelchen netzwerkfähigen Endgeräten 30,31,32,33, wie z.B. irgendwelchen CPE (Customer Premise Equipments), Personal Computers 30, Laptops 31, PDAs 32, Mobilfunkgeräten 33 etc. etc. auf die ein oder mehreren Netzwerke 40,41,42 zugreifen. Gerade in der heutigen Zeit kann die Vorrichtung z.B. nicht nur zum Auffinden von spezifischen Daten, sondern auch zum automatisierten Kontrollieren und/oder Überwachen von Datenflüssen in Netzwerken verwendet werden. Damit kann die Erfindung z.B. auch zur Terrorbekämpfung (z.B. Früherkennung eines Terroraktes) oder Bekämpfung anderer Kriminalität übers Internet (z.B. Rassismus, Pädophilie, etc.) verwendet werden.

Es ist wichtig darauf hinzuweisen, dass sich die erfindungsgemässe Clusterbildung/Agglomeratbildung nicht auf die einzelnen Dokumente bezieht, wie dies im Stand der Technik zum Teil geschieht (siehe z.B. WO 03/052627, US 6711585). Gemäss der Erfindung wird hier die Gesamtheit aller vorkommenden Begriffe in Cluster eingeteilt, um daraus einen Inhaltsraum zu konstruieren, der die in der Dokumentenkollektion behandelten Themen optimal charakterisieren kann. Dies ist erfindungsgemäss jedoch nur ein Zwischenschritt für die Projektion der Dokumente auf die Vektoren, welche schliesslich für die Klassifizierung der Dokumente in der Kohonen-Map verwendet wird. In der vorliegenden Erfindung bildet die erwähnt linguistische Datenbank die Grundlage für die Textanalyse. Die linguistische Datenbank kann wie im vorliegenden Fall sehr gross sein, wie hier z.B. mehr als 2.2 Millionen Einträge in unterschiedlichen Sprachen (hier z.B. englisch, deutsch, französisch und italienisch) umfassen. Durch das System werden Wörter bzw. zusammengesetzte Begriffe ähnlicher Bedeutung zu sprachübergreifenden Synonymgruppen zusammengefasst und mit dem "universellen" Taxonomiebaum verknüpft (zwecks Einstufung des Inhalts der Synonymgruppen). Bei der Analyse einer konkreten Dokumentenkollektion wird wie erwähnt zunächst aus dem effektiven Inhalt der vorliegenden Dokumente und den Verknüpfungen und Zusammenhängen, die in der linguistischen Datenbank gespeichert sind, ein 100-dimensionaler Inhaltsraum konstruiert, dessen Achsen die vorliegenden Dokumentinhalte optimal charakterisieren können. Nach einer Projektion der Dokumente auf den konstruierten Inhaltsraum werden die Dokumente mit den selbstorganisierenden neuronalen Netzen logisch (hier: Kohonen-Map) gegliedert und vollautomatisch mit Deskriptoren versehen. Das Besondere an der vorliegenden Erfindung und der neuen Technologie ist die Tatsache, dass bei der Klassifizierung einer beliebigen Dokumentenkollektion kein menschliches Vorarbeiten mehr nötig ist: keine Vorbereitung eines speziellen Vokabulars, keine spezielle Taxonomie, keine speziellen Thesauri und vor allem kein aufwändiges Trainieren der Dokumentenklassifizierung. Ausserdem wird das Mehrsprachigkeitsproblem konsequent gelöst (eine englische Übersetzung eines deutschen Dokuments erhält die gleiche Klassifizierung wie das deutsche Original). Dies sind direkte Folgen aus der Bezugnahme auf die linguistische Datenbank mit der universellen Taxonomie und die situativ konstruierte Projektion auf einen optimalen Inhaltsraum. Dies konnte bisher mit keinem bekannten Stand der Technik auch nur annähernd erreicht werden.

**Patentansprüche**

1. Sprach- und Textanalysevorrichtung (20) zur Bildung eines Such- und/oder Klassifizierungskataloges, welche mindestens eine linguistische Datenbank (22) zum Zuordnen von linguistischen Begriffen zu Datenrekords umfasst, wobei mittels der Sprach- und Textanalysevorrichtung Sprach- und/oder Textdaten (10) entsprechend der Datenrekords klassifizierbar und/oder sortierbar sind und wobei die linguistischen Begriffe mindestens Schlagworte und/oder Suchbegriffe umfassen, **dadurch gekennzeichnet,**
dass die linguistische Datenbank (22) Verknüpfungen von Wörtern und/oder zusammengesetzte Begriffe ähnlicher Bedeutung umfasst, wobei die Verknüpfungen Synonymgruppen einer Taxonomie-Table (21) zuordenbar sind,
dass die Sprach- und/oder Textanalysevorrichtung (20) ein Gewichtungsmodul (23) zum Gewichten von Tableelemente der Taxonomie-Table (21) basierend auf der Auftrethäufigkeit einzelner Verknüpfungen der linguistischen Datenbank (22) umfasst,
dass die Sprach- und/oder Textanalysevorrichtung (20) ein Integrationsmodul (24) umfasst, wobei mittels des Integrationsmodul (24) basierend auf Agglomerate von Elementen der Taxonomie-Table (21) eine viel-dimensionale, gewichtete Inhaltsmatrix generierbar ist,
dass die Sprach- und/oder Textanalysevorrichtung (20) mindestens ein neuronales Netzwerkmodul (26) zum Klassifizieren und/oder Sortieren der Sprach- und/oder Textdaten (10) basierend auf der Inhaltsmatrix umfasst, wobei mittels definierbaren Deskriptoren der Sprach- und/oder Textanalysevorrichtung (20) entsprechende Randbedingungen für einen oder mehrere Themenkreise bestimmbar sind.

2. Sprach- und Textanalysevorrichtung (20) nach Anspruch 1, **dadurch gekennzeichnet, dass** die Verknüpfungen der linguistische Datenbank sprachübergreifend definierbar sind.

3. Sprach- und Textanalysevorrichtung (20) zur Bildung eines Such- und/oder Klassifizierungskataloges, welche mindestens eine linguistische Datenbank (22) zum Zuordnen von linguistischen Begriffen zu Datenrekords umfasst, wobei mittels der Sprach- und Textanalysevorrichtung Sprach- und/oder Textdaten (10) entsprechend der Datenrekords klassifizierbar und/oder sortierbar sind und wobei die linguistischen Begriffe mindestens Schlagworte und/oder Suchbegriffe umfassen, **dadurch gekennzeichnet,**
dass die Sprach- und Textanalysevorrichtung (20) eine Taxonomie-Table (21) mit variablen Taxonknoten basierend auf der linguistischen Datenbank (22) umfasst, wobei ein oder mehrere Datenrekords einem Taxonknoten in der Taxonomie-Table (21) zuordenbar sind und wobei jeder Datenrekord einen variablen Signifikanzfaktor zur Wertung der Begriffe basierend mindestens auf Füllworten und/oder Verbindungsworten und/oder Schlagworten umfasst,
dass die Sprach- und Textanalysevorrichtung (20) ein Gewichtungsmodul (23) umfasst, wobei jedem Taxonknoten zusätzlich ein Gewichtungsparameter zum Erfassen von Auftrethäufigkeiten von Begriffen innerhalb der zu klassifizierenden und/oder sortierenden Sprach- und/oder Textdaten (10) zugeordnet abgespeichert ist,
dass die Sprach- und/oder Textanalysevorrichtung (20) ein Integrationsmodul (24) zum Bestimmen einer vordefinierbaren Anzahl Agglomerate basierend auf den Gewichtungsparametern der Taxonknoten in der Taxonomie-Table (21) umfasst, wobei ein Agglomerat mindestens ein Taxonknoten umfasst, und
dass die Sprach- und/oder Textanalysevorrichtung (20) mindestens ein neuronales Netzwerkmodul (26) zum Klassifizieren und/oder Sortieren der Sprach- und/oder Textdaten (10) basierend auf den Agglomeraten in der Taxonomie-Table (21) umfasst.

4. Sprach- und Textanalysevorrichtung (20) nach Anspruch 3, **dadurch gekennzeichnet, dass** das neuronale Netzwerkmodul (26) mindestens eine sebst-organisierende Kohonen-Map umfasst.

5. Sprach- und Textanalysevorrichtung (20) nach einem der Ansprüche 3 oder 4, **dadurch gekennzeichnet, dass** die Sprach- und Textanalysevorrichtung ein Entropiemodul (25) zur Bestimmung eines in einem Speichermodul abspeicherbaren Entropieparameters basierend auf der Verteilung eines Datenrekords in den Sprach- und/oder Textdaten (10) umfasst.

**6.** Sprach- und Textanalysevorrichtung (20) nach einem der Ansprüche 3 bis 5, **dadurch gekennzeichnet, dass** die linguistische Datenbank (22) mehrsprachige Datenrekords umfasst.

**7.** Sprach- und Textanalysevorrichtung (20) nach einem der Ansprüche 3 bis 6, **dadurch gekennzeichnet, dass** die Sprach- und Textanalysevorrichtung eine der linguistischen Datenbank (22) zugeordnete Hashtable umfasst, wobei mittels eines Hash-Wertes linguistisch verknüpfte Datenrekords in der Hashtable identifizierbar sind.

**8.** Sprach- und Textanalysevorrichtung (20) nach einem der Ansprüche 3 bis 7 **dadurch gekennzeichnet, dass** mittels eines Sprachparameters die Datenrekords einer Sprache zuordbar sind und in der Taxonomie-Table (21) als Synonym kennzeichenbar sind.

**9.** Sprach- und Textanalysevorrichtung (20) nach einem der Ansprüche 3 bis 8, **dadurch gekennzeichnet, dass** der Entropieparameter durch

$$\text{Entropie}_{DR} = \ln(\text{freqsum}_{DR}) - \Sigma\, F_{DR}\, \ln(F_{DR})/\text{freqsum}_{DR}$$

gegeben ist.

**10.** Sprach- und Textanalysevorrichtung (20) nach einem der Ansprüche 3 bis 9, **dadurch gekennzeichnet, dass** die Agglomerate einer n-dimensionalen Inhaltsmatrix eines n-dimensionalen Inhaltsraum zuordenbar sind.

**11.** Sprach- und Textanalysevorrichtung (20) nach Anspruch 10, **dadurch gekennzeichnet, dass** n gleich 100 ist.

**12.** Sprach- und Textanalysevorrichtung (20) nach einem der Ansprüche 3 bis 11, **dadurch gekennzeichnet, dass** die Sprach- und Textanalysevorrichtung Deskriptoren umfasst, mittels welchen definierbaren Deskriptoren entsprechende Randbedingungen für einen Themenkreis bestimmbar sind.

**13.** Sprach- und Textanalysevorrichtung (20) nach einem der Ansprüche 3 bis 12, **dadurch gekennzeichnet, dass** die Datenbank eine universelle, themenunabhängige linguistische Datenbank (22) umfasst und die Taxonomie-Table (21) universell und themenunabhängig erzeugbar ist.

**14.** Automatisiertes Sprach- und Textanalyseverfahren zur Bildung eines Such- und/oder Klassifizierungskataloges, wobei mittels einer linguistischen Datenbank (22) Datenrekords erfasst werden und Sprach- und/oder Textdaten (10) nach den Datenrekords klassifiziert und/oder sortiert werden, **dadurch gekennzeichnet,**
**dass** die Datenrekords der linguistischen Datenbank (22) einem Taxonknoten einer Taxonomie-Table (21) zugeordnet abgespeichert werden, wobei jeder Datenrekord einen variablen Signifikanzfaktor zur Wertung der Begriffe basierend mindestens auf Füllworten und/oder Verbindungsworten und/oder Schlagworten umfasst,
**dass** die Sprach- und/oder Textdaten (10) basierend auf der Taxonomie-Table (21) erfasst werden, wobei die Häufigkeit einzelner Datenrekords in den Sprach- und/oder Textdaten (10) mittels einem Gewichtungsmodul (23) bestimmt und einem Gewichtungsparameter der Taxonknoten zugeordnet wird,
**dass** mittels eines Integrationsmoduls (24) entsprechend der Gewichtungsparameter von einem oder mehreren Taxonknoten eine bestimmbare Anzahl Agglomerate in der Taxonomie-Table (21) bestimmt wird,
**dass** mittels eines neuronalen Netzwerkmoduls (26) die Sprach- und/oder Textdaten (10) basierend auf den Agglomeraten in der Taxonomie-Table (21) klassifiziert und/oder sortiert werden.

**15.** Automatisiertes Sprach- und Textanalyseverfahren nach Anspruch 14, **dadurch gekennzeichnet, dass** das neuronale Netzwerkmodul (26) mindestens eine sebst-organisierende Kohonen-Map umfasst.

**16.** Automatisiertes Sprach- und Textanalyseverfahren nach einem der Ansprüche 14 oder 15, **dadurch gekennzeichnet, dass** mittels eines Entropiemoduls (25) basierend auf der Verteilung eines Datenrekords in den Sprach- und/oder Textdaten (10) ein Entropiefaktor bestimmt wird.

**17.** Automatisiertes Sprach- und Textanalyseverfahren nach einem der Ansprüche 14 bis 16, **dadurch gekennzeichnet, dass** die linguistische Datenbank (22) mehrsprachige Datenrekords umfasst.

**18.** Automatisiertes Sprach- und Textanalyseverfahren nach einem der Ansprüche 14 bis 17, **dadurch gekennzeich-**

**net, dass** der linguistischen Datenbank (22) eine Hashtable zugeordnet abgespeichert wird, wobei die Hashtable mittels eines Hash-Wertes eine Identifikation von verknüpften Datenrekords umfasst.

19. Automatisiertes Sprach- und Textanalyseverfahren nach einem der Ansprüche 14 bis 18, **dadurch gekennzeichnet, dass** mittels eines Sprachparameters die Datenrekords einer Sprache zuordbar sind und in der Taxonomie-Table (21) synonym wertbar sind.

20. Automatisiertes Sprach- und Textanalyseverfahren nach einem der Ansprüche 14 bis 19, **dadurch gekennzeichnet, dass** der Entropiefaktor durch den Term

$$\text{Entropie}_{DR} = \ln(\text{freqsum}_{DR}) - \Sigma\, F_{DR}\, \ln(F_{DR})/\text{freqsum}_{DR}$$

gegeben ist.

21. Automatisiertes Sprach- und Textanalyseverfahren nach einem der Ansprüche 14 bis 20, **dadurch gekennzeichnet, dass** die Agglomerate einen n-dimensionalen Inhaltsraum bilden.

22. Automatisiertes Sprach- und Textanalyseverfahren nach Anspruch 21, **dadurch gekennzeichnet, dass** n gleich 100 ist.

23. Automatisiertes Sprach- und Textanalyseverfahren nach einem der Ansprüche 14 bis 22, **dadurch gekennzeichnet, dass** mittels definierbaren Deskriptoren entsprechende Randbedingungen für einen Themenkreis bestimmbar sind.

24. Sprach- und Textanalyseverfahren nach einem der Ansprüche 14 bis 23, **dadurch gekennzeichnet, dass** die Taxonknoten der Taxonomie-Table (21) basierend auf einer universellen, themenunabhängigen linguistischen Datenbank erzeugt werden, wobei die Datenbank (22) mindestens die universelle, themenunabhängige, linguistische Datenbank umfasst.

25. Computerprogrammprodukt, welches ein computerlesbares Medium mit darin enthaltenen Computerprogrammcodemitteln zur Steuerung eines oder mehrerer Prozessoren eines computer-basierten Systems zur automatisierten Sprach- und Textanalyse mittels Bildung eines Such- und/oder Klassifizierungskataloges, wobei basierend auf einer linguistischen Datenbank (22) Datenrekords erfasst werden und Sprach- und/oder Textdaten (10) nach den Datenrekords klassifiziert und/oder sortiert werden, **dadurch gekennzeichnet**
**dass** mittels des Computerprogrammproduktes die Datenrekords der linguistischen Datenbank (22) einem Taxonknoten einer Taxonomie-Table (21,...,25) zugeordnet abspeicherbar sind, wobei jeder Datenrekord einen variablen Signifikanzfaktor zur Wertung der Begriffe basierend mindestens auf Füllworten und/oder Verbindungsworten und/oder Schlagworten umfasst,
**dass** mittels des Computerprogrammproduktes die Sprach- und/oder Textdaten (10) basierend auf der Taxonomie-Table (21) erfassbar sind, wobei die Häufigkeit einzelner Datenrekords in den Sprach- und/oder Textdaten (10) einen Gewichtungsparameter der Taxonknoten bestimmen,
**dass** mittels des Computerprogrammproduktes entsprechend dem Gewichtungsparameter von einem oder mehreren Taxonknoten eine bestimmbare Anzahl Agglomerate in der Taxonomie-Table (21) bestimmbar sind,
**dass** mittels des Computerprogrammproduktes ein neuronales Netzwerk generierbar ist, mittels welchem die Sprach- und/oder Textdaten (10) basierend auf den Agglomeraten in der Taxonomie-Table (21) die Sprach- und/oder Textdaten (10) klassifizierbar und/oder sortierbar sind.

26. Computerprogrammprodukt, welches in den internen Speicher eines digitalen Computers ladbar ist und Softwarecodeabschnitte umfasst, mit denen die Schritte gemäss einem der Ansprüche 14 bis 24 durchführbar sind, wenn das Produkt auf einem Computer läuft, wobei die neuronalen Netzwerke softwaremässig und/oder hardwaremässig generierbar sind.

**Claims**

1. Language and text analysis apparatus (20) for formation of a search and/or classification catalog, which apparatus has at least one linguistic databank (22) for association of linguistic terms with data records, in which case the language and text analysis apparatus can be used to classify and/or to sort language and/or text data (10) corresponding to the data records, and in which the linguistic terms comprise at least keywords and/or search terms, **characterized**
**in that** the linguistic databank (22) comprises links between words and/or linked terms of similar meaning, in which case the links can be associated with synonym groups in a taxonomy table (21),
**in that** the language and/or text analysis apparatus (20) has a weighting module (23) for weighting of table elements in the taxonomy table (21) on the basis of the frequency of occurrence of individual links in the linguistic databank (22),
**in that** the language and/or text analysis apparatus (20) has an integration module (24), in which case the integration module (24) can be used to generate a multidimensional, weighted content matrix on the basis of agglomerates of elements in the taxonomy table (21),
**in that** the language and/or text analysis apparatus (20) has at least one neural network module (26) for classification and/or sorting of the language and/or text data (10) on the basis of the content matrix, in which case definable descriptors for the language and/or text analysis apparatus (20) can be used to determine appropriate constraints for one or more subject groups.

2. Language and text analysis apparatus (20) according to Claim 1, **characterized in that** the links in the linguistic databank can be defined over more than one language.

3. Language and text analysis apparatus (20) for formation of a search and/or classification catalog, which apparatus has at least one linguistic databank (22) for association of linguistic terms with data records, in which case the language and text analysis apparatus can be used to classify and/or to sort language and/or text data (10) corresponding to the data records, and in which the linguistic terms comprise at least keywords and/or search terms, **characterized**
**in that** the language and text analysis apparatus (20) has a taxonomy table (21) with variable taxon nodes on the basis of the linguistic databank (22), in which case' one or more data records can be associated with one taxon node in the taxonomy table (21), and in which case each data record has a variable significance factor for weighting of the terms on the basis of at least filling words and/or linking words and/or keywords,
**in that** the language and text analysis apparatus (20) has a weighting module (23), in which a weighting parameter for recording of frequencies of occurrence of terms within the language and/or text data (10) to be sorted and/or to be classified is additionally stored associated with each taxon node,
**in that** the language and/or text analysis apparatus (20) has an integration module (24) for determination of a predefinable number of agglomerates on the basis of the weighting parameters of the taxon nodes in the taxonomy table (21), with one agglomerate comprising at least one taxon node, and
**in that** the language and/or text analysis apparatus (20) has at least one neural network module (26) for classification and/or for sorting of the language and/or text data (10) on the basis of the agglomerates in the taxonomy table (21).

4. Language and text analysis apparatus (20) according to Claim 3, **characterized in that** the neural network module (26) has at least one self-organizing Kohonen map.

5. Language and text analysis apparatus (20) according to one of Claims 3 or 4, **characterized in that** the language and text analysis apparatus has an entropy module (25) for determination of an entropy parameter, which can be stored in a memory module, on the basis of the distribution of a data record in the language and/or text data (10).

6. Language and text analysis apparatus (20) according to one of Claims 3 to 5, **characterized in that** the linguistic databank (22) has multilingual data records.

7. Language and text analysis apparatus (20) according to one of Claims 3 to 6, **characterized in that** the language and text analysis apparatus has a hash table which is associated with the linguistic databank (22) in which case a hash value can be used to identify linguistically linked data records in the hash table.

8. Language and text analysis apparatus (20) according to one of Claims 3 to 7, **characterized in that** a language parameter can be used to associate the data records with a language and can be identified as a synonym in the taxonomy table (21).

9. Language and text analysis apparatus (20) according to one of Claims 3 to 8, **characterized in that** the entropy parameter is given by:

$$\text{Entropy}_{DR} = \ln(\text{freqsum}_{DR}) - \sum F_{DR} \ln(F_{DR})/\text{freqsum}_{DR}$$

**10.** Language and text analysis apparatus (20) according to one of Claims 3 to 9, **characterized in that** the agglomerates can be associated with an n-dimensional content matrix in an n-dimensional content space.

**11.** Language and text analysis apparatus (20) according to Claim 10, **characterized in that** n is equal to 100.

**12.** Language and text analysis apparatus (20) according to one of Claims 3 to 11, **characterized in that** the language and text analysis apparatus has descriptors by means of which constraints which correspond to definable descriptors can be determined for a subject group.

**13.** Language and text analysis apparatus (20) according to one of Claims 3 to 12, **characterized in that** the databank has a universal, subject-independent, linguistic databank (22), and the taxonomy table (21) can be produced universally and independently of subject.

**14.** Automated language and text analysis method for formation of a search and/or classification catalog, with a linguistic databank (22) being used to record data records and to classify and/or sort language and/or text data (10) on the basis of the data records, **characterized**
**in that** the data records in the linguistic databank (22) are stored associated with a taxon node in a taxonomy table (21), with each data record having a variable significance factor for weighting of the terms based at least on filling words and/or linking words and/or keywords,
**in that** the language and/or text data (10) is recorded on the basis of the taxonomy table (21), with the frequency of individual data records in the language and/or text data (10) being determined by means of a weighting module (23) and being associated with a weighting parameter for the taxon node,
**in that** an integration module (24) is used to determine a determinable number of agglomerates in the taxonomy table (21) on the basis of the weighting parameters of one or more taxon nodes,
**in that** a neural network module (26) is used to classify and/or sort the language and/or text data (10) on the basis of the agglomerates in the taxonomy table (21).

**15.** Automated language and text analysis method according to Claim 14, **characterized in that** the neural network module (26) has at least one self-organizing Kohonen map.

**16.** Automated language and text analysis method according to one of Claims 14 or 15, **characterized in that** an entropy module (25) is used to determine an entropy factor on the basis of the distribution of a data record in the language and/or text data (10).

**17.** Automated language and text analysis method according to one of Claims 14 to 16, **characterized in that** the linguistic databank (22) has multilingual data records.

**18.** Automated language and text analysis method according to one of Claims 14 to 17, **characterized in that** a hash table is stored associated with the linguistic databank (22), with the hash table comprising an identification of linked data records by means of a hash value.

**19.** Automated language and text analysis method according to one of Claims 14 to 18, **characterized in that** the data records can be associated with a language and can be weighted synonymously in the taxonomy table (21) by means of a language parameter.

**20.** Automated language and text analysis method according to one of Claims 14 to 19, **characterized in that** the entropy factor is given by the term

$$\text{Entropy}_{DR} = \ln(\text{freqsum}_{DR}) - \sum F_{DR} \ln(F_{DR})/\text{freqsum}_{DR}$$

**21.** Automated language and text analysis method according to one of Claims 14 to 20, **characterized in that** the agglomerates form an n-dimensional content space.

**22.** Automated language and text analysis method according to Claim 21, **characterized in that** n is equal to 100.

**23.** Automated language and text analysis method according to one of Claims 14 to 22, **characterized in that** definable descriptors can be used to determine corresponding constraints for a subject group.

**24.** Language and text analysis method according to one of Claims 14 to 23, **characterized in that** the taxon nodes in the taxonomy table (21) are produced on the basis of a universal, subject-independent, linguistic databank, with the databank (22) comprising at least the universal, subject-independent, linguistic databank.

**25.** Computer program product which a computer-legible medium with computer program code means contained therein in order to control one or more processors in a computer-based system for automated language and text analysis by the formation of a search and/or classification catalog, with data records being recorded on the basis of a linguistic databank (22), and with language and/or text data (10) being classified and/or sorted on the basis of the data records, **characterized**

**in that** the computer program product can be used to store the data records in the linguistic databank (22) associated with a taxon node in a taxonomy table (21, ..., 25), with each data record having a variable significance factor for weighting of the terms on the basis at least of filling words and/or linking words and/or keywords,

**in that** the computer program product can be used to record the language and/or text data (10) on the basis of the taxonomy table (21), with the frequency of individual data records in the language and/or text data (10) determining a weighting parameter for the taxon nodes,

**in that** the computer program product can be used to determine a determinable number of agglomerates in the taxonomy table (21) on the basis of the weighting parameter of one or more taxon nodes,

**in that** the computer program product can be used to generate a neural network, which can be used to classify and/or sort the language and/or text data (10) on the basis of the agglomerates in the taxonomy table (21), the language and/or text data (10).

**26.** Computer program product which can be loaded in the internal memory of a digital computer and has software code sections by means of which the steps according to one of Claims 14 to 24 can be carried out when the product is run on a computer, in which case the neural networks can be generated with software and/or hardware.

**Revendications**

**1.** Dispositif d'analyse vocale et textuelle (20) pour la formation d'un catalogue de recherche et/ ou de classification qui comprend au moins.une base de données linguistique (22) pour l'attribution de termes linguistiques à des enregistrements de données, où des données vocales et/ ou textuelles (10) peuvent être classifiées et/ ou triées selon les enregistrements de données au moyen du dispositif d'analyse vocale ou textuelle et où les termes linguistiques comprennent au moins des mots-clés et/ ou des termes de recherche, **caractérisé**

**en ce que** la base de données linguistique (22) comprend des combinaisons de mots et/ ou des termes composés de signification similaire, où les combinaisons sont classables en des groupes de synonymes d'une table de taxonomie (21),

**en ce que** le dispositif d'analyse vocale et textuelle (20) comprend un module de pondération (23) pour pondérer les éléments de la table de taxonomie (21) basé sur la fréquence d'apparition des combinaisons individuelles de la base de données linguistique (22),

**en ce que** le dispositif d'analyse vocale et textuelle (20) comprend un module d'intégration (24), où une matrice de contenu pondérée multidimensionnelle basée sur des agglomérats d'éléments de la table de taxonomie (21) peut être générée au moyen du module d'intégration (24),

**en ce que** le dispositif d'analyse vocale et textuelle (20) comprend au moins un module de réseau neuronal (26) pour classifier et/ ou trier les données vocales et/ ou textuelles (10) en se basant sur la matrice du contenu, où des conditions annexes correspondantes pour un ou plusieurs thèmes peuvent être déterminées au moyen de descripteurs du dispositif d'analyse vocale et/ ou textuelle (20) définissables.

**2.** Dispositif d'analyse vocale et textuelle (20) selon la revendication 1, **caractérisé en ce que** les combinaisons de la base de données linguistique sont définissables de façon interlinguistique.

**3.** Dispositif d'analyse vocale et textuelle (20) pour la formation d'un catalogue de recherche et/ ou de classification qui comprend au moins une base de données linguistique (22) pour l'attribution de termes linguistiques à des enregistrements de données, où des données vocales et/ ou textuelles (10) peuvent être classifiées et/ ou triées selon les enregistrements de données au moyen du dispositif d'analyse vocale ou textuelle et où les termes linguistiques comprennent au moins des mots-clés et/ ou des termes de recherche, **caractérisé**

**en ce que** le dispositif d'analyse vocale et textuelle (20) comprend une table de taxonomie (21) avec des noeuds de taxon variables basés sur la base de données linguistique (22), où un ou plusieurs enregistrements de données peuvent être attribués à un noeud de taxon dans la table de taxonomie (21) et où chaque enregistrement de données comprend un facteur de signification pour l'évaluation des termes basée au moins sur des mots explétifs et/ ou des mots de liaison et/ ou des mots-clés,

**en ce que** le dispositif d'analyse vocale et textuelle (20) comprend un module de pondération (23), où un paramètre de pondération, qui est attribué à chaque noeud de taxon, est additionnellement sauvegardé pour enregistrer la fréquence d'apparition de termes parmi des données vocales et/ ou textuelles (10) qui sont à classifier et/ ou à trier,

**en ce que** le dispositif d'analyse vocale et textuelle (20) comprend un module d'intégration (24) pour déterminer un nombre prédéfinissable d'agglomérats basé sur les paramètres de pondération des noeuds de taxon dans la table de taxonomie (21), où un agglomérat comprend au moins un noeud de taxon, et

**en ce que** le dispositif d'analyse vocale et textuelle (20) comprend au moins un module de réseau neuronal (26) pour classifier et/ ou trier les données vocales et/ ou textuelles (10) basé sur les agglomérats dans la table de taxonomie (21).

4. Dispositif d'analyse vocale et textuelle (20) selon la revendication 3, **caractérisé en ce que** le module de réseau neuronal (26) comprend au moins une carte de Kohonen auto organisatrice.

5. Dispositif d'analyse vocale et textuelle (20) selon l'une quelconque des revendications 3 ou 4, **caractérisé en ce que** le dispositif d'analyse vocale et textuelle comprend un module d'entropie (25) pour déterminer un paramètre d'entropie qui peut être sauvegardé dans un module de sauvegarde basé sur la distribution d'un enregistrement de données dans les données vocales et/ ou textuelles (10).

6. Dispositif d'analyse vocale et textuelle (20) selon l'une quelconque des revendications 3 à 5, **caractérisé en ce que** la base de données linguistique (22) comprend des enregistrements de données multilinguistiques.

7. Dispositif d'analyse vocale et textuelle (20) selon l'une quelconque des revendications 3 à 6, **caractérisé en ce que** le dispositif d'analyse vocale et textuelle comprend une table de hachage attribuée à la base de données linguistique (22), où des enregistrements de données combinés de manière linguistique sont identifiables dans la table de hachage au moyen d'une valeur de hachage.

8. Dispositif d'analyse vocale et textuelle (20) selon l'une quelconque des revendications 3 à 7, **caractérisé en ce que** les enregistrements de données peuvent être attribués à une langue au moyen d'un paramètre vocal et peuvent être marqués dans la table de taxonomie (21) en tant que synonyme au moyen d'un paramètre vocal.

9. Dispositif d'analyse vocale et textuelle (20) selon l'une quelconque des revendications 3 à 8, **caractérisé en ce que** le paramètre d'entropie est donné par

$$\text{Entropie}_{DR} = \ln(\text{freqsum}_{DR}) - \square \, F_{DR} \, \ln(F_{DR})/\text{freqsum}_{DR}$$

10. Dispositif d'analyse vocale et textuelle (20) selon l'une quelconque des revendications 3 à 9, **caractérisé en ce que** les agglomérats d'une matrice de contenu n-dimensionnelle peuvent être attribués à un domaine de contenu n-dimensionnel.

11. Dispositif d'analyse vocale et textuelle (20) selon la revendication 10, **caractérisé en ce que** n est égal à 100.

12. Dispositif d'analyse vocale et textuelle (20) selon l'une quelconque des revendications 3 à 11, **caractérisé en ce que** le dispositif d'analyse vocale et textuelle comprend des descripteurs, où des conditions annexes correspondantes pour un thème peuvent être déterminées au moyen de ces descripteurs définis.

13. Dispositif d'analyse vocale et textuelle (20) selon l'une quelconque des revendications 3 à 12, **caractérisé en ce que** la base de données comprend une base de données (22) linguistique universelle et indépendante du sujet, et la table de taxonomie (21) peut être générée de manière universelle et indépendante du sujet.

**14.** Dispositif d'analyse vocale et textuelle automatisé pour la formation d'un catalogue de recherche et/ ou de classification, où des enregistrements de données sont enregistrés au moyen d'une base de données linguistique (22) et des données vocales et/ ou textuelles (10) sont classifiées et/ ou triées selon les enregistrements de données, **caractérisé en**
en ce que les enregistrements de données de la base de données linguistique (22) sont sauvegardés attribués à un noeud de taxon d'une table de taxonomie (21), où chaque enregistrement de données comprend un facteur de signification variable pour l'évaluation des termes basé au moins sur des mots explétifs et/ ou des mots de liaison et/ ou des mots-clés,
en ce que les données vocales et/ ou textuelles (10) sont enregistrées basées sur la table de taxonomie (21), où la fréquence d'enregistrements de données individuels dans les données vocales et/ ou textuelles (10) est déterminée au moyen d'un module de pondération (23) et attribuée à un paramètre de pondération du noeud de taxon,
en ce qu'un nombre déterminable d'agglomérats dans la table de taxonomie (21) est déterminé selon les paramètres de pondération d'un noeud de taxon ou de plusieurs noeuds de taxon au moyen d'un module d'intégration (24),
en ce que les données vocales et/ ou textuelles (10) sont classifiées et/ ou triées basées sur les agglomérats dans la table de taxonomie (21) au moyen d'un module de réseau neuronal (26).

**15.** Dispositif d'analyse vocale et textuelle automatisé selon la revendication 14, **caractérisé en ce que** le module de réseau neuronal (26) comprend au moins une carte de Kohonen auto organisatrice.

**16.** Dispositif d'analyse vocale et textuelle automatisé selon l'une des revendications 14 ou 15, **caractérisé en ce qu'**un facteur d'entropie est déterminé basé sur la distribution d'un enregistrement de données dans les données vocales et/ ou textuelles (10) au moyen d'un module d'entropie (25).

**17.** Dispositif d'analyse vocale et textuelle automatisé selon l'une quelconque des revendications 14 à 16, **caractérisé en ce que** la base de données linguistique (22) comprend des enregistrements de données multilingues.

**18.** Dispositif d'analyse vocale et textuelle automatisé selon l'une quelconque des revendications 14 à 17, **caractérisé en ce qu'**une table de hachage est sauvegardée attribuée à la base de données linguistique (22), où la table de hachage comprend une identification d'enregistrements de données combinés au moyen d'une valeur de hachage.

**19.** Dispositif d'analyse vocale et textuelle automatisé selon l'une quelconque des revendications 14 à 18, **caractérisé en ce que** les enregistrements de données peuvent être attribués à une langue et peuvent être évalués dans la table de taxonomie (21) en tant que synonyme au moyen d'un paramètre vocale.

**20.** Dispositif d'analyse vocale et textuelle automatisé selon l'une quelconque des revendications 14 à 19, **caractérisé en ce que** le facteur d'entropie est donné par

$$\text{Entropie}_{DR} = \ln(\text{freqsum}_{DR}) - \square\ F_{DR}\ \ln(F_{DR})/\text{freqsum}_{DR}$$

**21.** Dispositif d'analyse vocale et textuelle automatisé selon l'une quelconque des revendications 14 à 20, **caractérisé en ce que** les agglomérats forment un domaine de contenu n-dimensionnel.

**22.** Dispositif d'analyse vocale et textuelle automatisé selon la revendication 21, **caractérisé en ce que** n est égal à 100.

**23.** Dispositif d'analyse vocale et textuelle automatisé selon l'une quelconque des revendications 14 à 22, **caractérisé en ce que** des conditions annexes correspondantes pour un thème peuvent être déterminées au moyen de descripteurs définissables.

**24.** Dispositif d'analyse vocale et textuelle automatisé selon l'une quelconque des revendications 14 à 23, **caractérisé en ce que** les noeuds de taxon de la table de taxonomie (21) sont générés basés sur une base de données linguistique universelle et indépendante du sujet, où la base de données (22) comprend au moins la base de données linguistique universelle et indépendante du sujet.

**25.** Produit de programme d'ordinateur qui comprend un médium lisible par un ordinateur dans lequel sont contenus des codes de programmes d'ordinateur pour la commande d'un processeur ou de plusieurs processeurs d'un système basé sur ordinateur pour l'analyse vocale et textuelle automatisé au moyen de la formation d'un catalogue de recherche et/ ou de classification, où des enregistrements de données sont enregistrés basés sur une base de données linguistique (22) et des données vocales et/ ou textuelles (10) sont classifiées et/ ou triées selon les enregistrements de données, **caractérisé**

**en ce qu'**au moyen du produit de programme d'ordinateur, les enregistrements de données de la base de données linguistique (22) sont sauvegardés attribués à un noeud de taxon d'une table de taxonomie (21,...,25), où chaque enregistrement de données comprend un facteur de signification variable pour l'évaluation des termes basé au moins sur des mots explétifs et/ ou des mots de liaison et/ ou des mots-clés,

**en ce qu'**au moyen du produit de programme d'ordinateur, les données vocales et/ ou textuelles (10) peuvent être enregistrées basées sur la table de taxonomie (21), où la fréquence d'enregistrements de données individuels dans les données vocales et/ ou textuelles (10) déterminent un paramètre de pondération des noeuds de taxon,

**en ce qu'**au moyen du produit de programme d'ordinateur, un nombre déterminable d'agglomérats dans la table de taxonomie (21) peut être déterminé selon le paramètre de pondération d'un noeud de taxon ou de plusieurs noeuds de taxon,

**en ce qu'**au moyen du produit de programme d'ordinateur peut être généré un réseau neuronal avec lequel les données vocales et/ ou textuelles (10) basées sur les agglomérats dans la table de taxonomie (21) peuvent être classifiées et/ ou triées.

26. Produit de programme d'ordinateur qui peut être chargé dans la mémoire interne d'un ordinateur numérique et qui comprend des sections de code de software avec lesquelles les étapes selon l'une quelconque des revendications 14 à 24 peuvent être exécutées quand le produit tourne sur un ordinateur, où les réseaux neuronaux peuvent être générés par software et/ ou par hardware.

FIG. 1

FIG. 2

**FIG. 3**

Detailwörterliste

Wortgruppe (Synonyme)

Hypernyme (falls anwendbar)

benignity
benignancy
kindness
eye blink
nictitation
winking
blinking
check ✕
bank check
cheque
enrollment
enrolment
registration
despatch
dispatch
communique
Berne
Bern
Swiss capital
. . .

. . .
kindness
. . .
nictitation
. . .
check
. . .
registration ✕
. . .
dispatch
. . .
Bern
. . .
object ✕
. . .

| Level 1 | Level 2 | Level 3 | etc. |
|---------|---------|---------|------|

FIG. 4

FIG. 5

**FIG. 6**

Dokument

Erste Abschätzung
der Sprache (e/d/f/i)

Text Mining (Dateibearbeitung)

- Extraktion von Wörtern/Termen

- Vergleich mit den Einträgen in der linguistischen Datenbank,
basierend auf der momentanen Sprache und grammatikalischen
Regeln, zum korrekten Abgleich; Zuordnung des Synset und
Hypernym-Kodes, der Signifikanz und Sprache von der Datenbank.
- generieren neuer Wörter und Synsets für nicht passende Terme
- Häufigkeitsberechnung pro Wort/Term und Dokument
- Anpassung der momentanen Sprache, falls notwendig

Speichern der kondensierten Information

weitere
Dokumente zu
bearbeiten?

Ja

Nein

**FIG. 7**

Ende der Dateibearbeitung (Text Mining)

Für jede Spalte jcol in Zeile jrow mit

DocDist (jcol,jrow) ≤DocEps

und basierend auf einem Dokument jcol , welches

noch nicht einem Cluster zugeordnet ist:

Finde Zeile2 in jcol, wobei
DocDist (jcol,jrow2) ≤DocEps

DocDist (jrow2,jrow)
≤DocEps?

Ja

Nein

Metadatei
von jcol näher zu
jrow als zu jrow 2
(Titel, No. der Worte)?

Ja

Zuordnung des
Dokumentes jcol
zum Cluster nclust

Nein

Gibt
es weitere Dokumente, d.h. nicht zu einem
Cluster zugeordnete
Dokumente?

Ja

Nein

**FIG. 8**

Resultat: Die Dokumente in einem Neuron werden
zu nclust unterschiedlichen Clustern zugeordnet

**EP 1 779 271 B1**

IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6714939 B
- WO 03052627 A1
- AU 0100198 W
- US 6711585 B1
- WO 03052627 A
- US 6711585 B

**In der Beschreibung aufgeführte Nicht-Patentliteratur**

- **G. CYBENKO.** Approximation by Superpositions of a sigmoidal function. *Math. Control, Sig. Syst.,* 1989, vol. 2, 303-314
- **M.T. HAGAN ; M.B. MENJAJ.** Training Feedforward Networks with the Marquardt Algorithm. *IEEE Transactions on Neural Networks,* November 1994, vol. 5 (6), 989-993
- **K. HORNIK ; M. STINCHCOMBE ; H. WHITE.** Multilayer Feedforward Networks are universal Approximators. *Neural Networks,* 1989, vol. 2, 359-366